# EUROPEAN PATENT SPECIFICATION

(11) **EP 3 536 588 B1**
(45) Date of publication and mention of the grant of the patent: **19.08.2020**
(21) Application number: 19159543.8
(22) Date of filing: 27.02.2019
(51) Int. Cl.: B62J 17/02

(54) **STRADDLED VEHICLE**
GRÄTSCHSITZFAHRZEUG
VÉHICULE À ENFOURCHER

(30) Priority: 09.03.2018 JP 2018043112; 08.08.2018 JP 2018149465
(43) Date of publication of application: 11.09.2019
(73) Proprietor: Yamaha Hatsudoki Kabushiki Kaisha, Iwata-shi, Shizuoka 438-8501 (JP)
(72) Inventor: ADACHI, Takashi, Iwata-shi, Shizuoka 438-8501 (JP); OI, Yoshifumi, Iwata-shi, Shizuoka 438-8501 (JP); YOSHIGUCHI, Daisuke, Iwata-shi, Shizuoka 438-8501 (JP); TAKARA, Koji, Iwata-shi, Shizuoka 438-8501 (JP); NGUYENVAN, Phu, Iwata-shi, Shizuoka 438-8501 (JP)
(74) Representative: Grünecker Patent- und Rechtsanwälte PartG mbB

(56) References cited:
- EP-A2- 2 202 137
- WO-A1-2014/157372
- JP-A- 2013 071 566
- TW-U- M 330 674

## Description

The present invention relates to a straddled vehicle according to the preamble of independent claim 1. Such a straddled vehicle can be taken from the prior art document EP 2 202 137 A2.

TW201627184A discloses a scooter that is an example of a straddled vehicle. The scooter includes a knee cover located in front of the seat, a main switch mounted to the knee cover, and a charging socket mounted to the knee cover.

The key hole of the main switch is located in a recessed base portion that is provided on the upper right portion of the knee cover. The main switch extends from the base portion obliquely forward and downward. The lower end portion of the main switch is located inside an exterior cover that includes the knee cover. The hole of the charging socket that is opened and closed by a dust cover is located below the key hole of the main switch and oriented downward in a rear view of the scooter. The storage portion of the knee cover is disposed under the charging socket in a rear view of the scooter. The charging socket is not located inside the storage portion but exposed on the knee cover.

However, in the scooter disclosed in TW201627184A, the lower end portion of the main switch and the front end portion of the charging socket are located inside the exterior cover and disposed close to each other. So, the main switch and the charging socket need to be laid out in order to prevent the main switch and the charging socket from making contact with each other in the exterior cover. In the scooter disclosed in TW201627184A, the main switch is tilted in order to prevent the main switch and the charging socket from making contact with each other in the exterior cover. Thus, if the hole of the charging socket is disposed below the key hole of the main switch without increasing the exterior cover in size, then the degree of freedom in the layout of the main switch and the charging socket may be lowered.

Furthermore, in the scooter disclosed in TW201627184A, when a power supply cable has been connected to the charging socket, the power supply cable would be arranged close to the legs of the rider. This may cause degradation of rider comfort.

Therefore, an object of the present invention is to provide a straddled vehicle which enables ensuring a degree of freedom in the layout of the main switch and the electric power supply socket and rider comfort. The present object is achieved by a straddled vehicle according to Claim 1. Preferred embodiments are laid down in the dependent claims.

In the scooter disclosed in TW201627184A, since the hole of the charging socket is oriented downward in a rear view of the scooter, when an electric device placed in the storage portion is connected to the charging socket through the power supply cable, the upper end portion of the power supply cable is disposed so as to hang down rearward from the charging socket toward the legs of the rider. Such a power supply cable layout causes the power supply cable to protrude toward a leg space in which the feet and legs of the rider are placed. This may cause degradation of rider comfort.

In this context, five requirements for a straddled vehicle may be taken into consideration: Requirement 1) Preservation or improvement of the operability of the main switch and the charging socket; Requirement 2) Improvement of the charging socket in water resistance; Requirement 3) Prevention of interference of the main switch and the charging socket in the exterior cover; Requirement 4) Preservation or improvement of the degree of freedom in the layout of the main switch and the charging socket; and Requirement 5) Preservation or improvement of rider comfort.

Considering that while both Requirement 1, i.e., the preservation or improvement of the operability of the main switch and the charging socket and Requirement 4, i.e., the preservation or improvement of the degree of freedom in the layout of the main switch and the charging socket are preserved at the same time, Requirement 3, i.e., the improvement of the interference of the main switch and the charging socket in the exterior cover is carried out. In this case, it is conceivable to extend rearward a portion of the knee cover to which the charging socket is mounted so as to move the charging socket rearward with respect to the main switch. However, this method causes the charging socket to come closer to the legs of the rider, thereby narrowing the space in which the legs of the rider are received. Additionally, the power supply cable mounted to the charging socket comes closer to the legs of the rider. Thus, this method may satisfy Requirement 3, i.e., the prevention of the interference of the main switch and the charging socket in the exterior cover, but may not satisfy Requirement 5 or even degrade rider comfort.

Furthermore, considering that while the degradation of the rider comfort of Requirement 5 is prevented, Requirement 3, i.e., the prevention of the interference of the main switch and the charging socket in the exterior cover and Requirement 4, i.e., the preservation or improvement of the degree of freedom in the layout of the main switch and the charging socket are carried out. In this case, it is conceivable to move the charging socket upward and dispose the charging socket on a front wall of a recess that is provided on the upper right portion of the knee cover. When the charging socket is disposed at a position above the key hole of the main switch, this makes it difficult for the charging socket to come into contact with the main switch in the exterior cover. Furthermore, since locating the charging socket on the front wall of the recess will cause the charging socket to be also displaced forward, it is possible to enhance rider comfort of Requirement 5.

To address these problems, it may focused attention on the space above the main switch and made a close study of whether this space could be used to receive the charging socket. This was because it was thought that using this space to store the power supply cable would not cause the power supply cable extending rearward from the charging socket to narrow the leg space. On the other hand, when the charging socket is move to a space above the main switch with the hole of the charging socket kept oriented downward, the power supply cable that has been inserted into the hole of the charging socket would be disposed so as to hang down rearward from the charging socket toward the main key that has been inserted into the main switch in a side view of the vehicle. In this case, when the main key is operated, the power supply cable may cause obstruction. Alternatively, when the power supply cable is connected to the charging socket or disconnected from the charging socket, the main key may cause obstruction.

If the posture of the charging socket is changed so that the hole of the charging socket is not oriented downward, such an additional problem may be resolved. However, for example, orienting the hole of the charging socket upward would cause falling water such as rainwater to easily enter the hole of the charging socket when the dust cover is opened.

Therefore a preferred embodiment provides a straddled vehicle that includes the following: a prime mover which generates power to run the straddled vehicle; a frame including a head pipe disposed at a vehicle center in a width direction of the vehicle; a seat located behind the head pipe for a rider to sit on; a leg shield which is located between the head pipe and the seat in a front-rear direction of the vehicle and located in front of the legs of the rider sitting on the seat; a main switch which is located on a right or left side of the head pipe in the width direction of the vehicle and which is to be operated by the rider to start the prime mover; and an electric power supply socket that includes a terminal insertion hole into which a terminal of an electric device is inserted, the electric power supply socket being disposed on the same side as the main switch relative to the head pipe in the width direction of the vehicle. The straddled vehicle is adapted such that the leg shield includes a base to which the main switch is mounted, and a front wall which is located farther to the front than a rear end of the main switch and extends upward from the base, and to which the electric power supply socket is mounted; the main switch and the electric power supply socket are located on an outer surface of the leg shield; the terminal insertion hole of the electric power supply socket is located above the main switch; at least a portion of the terminal insertion hole is located farther to the front than the rear end of the main switch in a side view of the vehicle; at least a portion of the terminal insertion hole overlaps the front wall in a plan view of the vehicle; a center line of the electric power supply socket extends horizontally or rearward and upward in a side view of the vehicle, and the front wall of the leg shield includes a ceiling wall which has a rear end disposed farther to the rear than the electric power supply socket and which is located above the electric power supply socket.

According to this arrangement, the main switch is located on the right or left side of the head pipe. When the main switch is operated, the prime mover to run the straddled vehicle is started. The electric power supply socket to which an electric device such as a socket charger or a power supply cable is connected is located on the same side as the main switch relative to the head pipe. The main switch and the electric power supply socket are exposed on the leg shield that faces the rider sitting on the seat.

The terminal insertion hole of the electric power supply socket is located above the main switch. Thus, compared with the case where a portion of the terminal insertion hole is located at the same height as that of the main switch, it is difficult for the main switch and the electric power supply socket to make contact with each other in a space in front of the leg shield. Thus, there is no need to make any layout change, which is essentially unnecessary, to prevent the main switch and the electric power supply socket from making contact with each other. This enables the degree of freedom in the layout of the main switch and the electric power supply socket to be increased.

Furthermore, the center line of the electric power supply socket extends horizontally or rearward and upward in a side view of the vehicle. When the terminal of the power supply cable is inserted into the terminal insertion hole, the power supply cable does not immediately hang down from the terminal insertion hole of the electric power supply socket but hangs down after having been extended horizontally or obliquely upward from the terminal insertion hole of the electric power supply socket. Thus, compared with the case where the center line of the electric power supply socket extends rearward and downward in a side view of the vehicle, it is easier to operate the main switch and the electric device.

Additionally, at least a portion of the terminal insertion hole is located farther to the front than the rear end of the main switch in a side view of the vehicle. Thus, an electric device connected to the electric power supply socket such as the power supply cable is also displaced forward. Thus, it is difficult for the power supply cable or the like to make contact with the legs of the rider. In addition, it is also possible to expand forward the space which is capable of receiving the legs of the rider. This makes it possible to improve rider comfort.

Furthermore, the main switch and the electric power supply socket are not located in the storage portion but exposed on the leg shield. It is thus easy to operate the main switch and the electric power supply socket. Furthermore, the front wall of the leg shield includes the ceiling wall disposed above the electric power supply socket, and the rear end of the ceiling wall corresponding to the rear end of the front wall is located farther to the rear than the electric power supply socket. At least a portion of the terminal insertion hole overlaps the front wall in a plan view of the vehicle. That is, at least a portion of the terminal insertion hole is hidden by the leg shield in a plan view of the vehicle. Thus, even if the terminal insertion hole is not oriented downward, it is difficult for falling water such as rainwater to enter the terminal insertion hole. Thus, it is difficult for the water falling toward the terminal insertion hole to reach the terminal insertion hole.

The electric device refers to a portable electric device that moves together with the straddled vehicle while the straddled vehicle is traveling. The terminal of the electric device may be a terminal of the electric device itself such as the socket charger or an on-board charger, may also be a terminal of the adapter that includes a hole that fits the terminal of the electric device or the power supply cable, or may also be a terminal of the power supply cable to connect the electric device and the electric power supply socket.

In the present preferred embodiment, at least one of the following features may be added to the above straddled vehicle.

At least a portion of the terminal insertion hole is located farther to the front than the upper end of the main switch in a side view of the vehicle.

According to this arrangement, at least a portion of the terminal insertion hole is located farther to the front than the rear end of the main switch in a side view of the vehicle, and also located farther to the front than the upper end of the main switch in a side view of the vehicle. Thus, the electric power supply socket and an electric device connected to the electric power supply socket are further spaced away from the legs of the rider sitting on the seat. This makes it possible to improve rider comfort.

The entirety of the terminal insertion hole overlaps the front wall in a plan view of the vehicle.

According to this arrangement, not a portion of the terminal insertion hole but the entirety of the terminal insertion hole overlaps the front wall in a plan view of the vehicle and is hidden by the front wall in a plan view of the vehicle. Thus, it is more difficult for the water falling toward the terminal insertion hole to reach the terminal insertion hole.

At least a portion of the terminal insertion hole overlaps the front wall in a side view of the vehicle.

According to this arrangement, not only in a plan view of the vehicle but also in a side view of the vehicle, a portion of the terminal insertion hole is hidden by the front wall. For example, when the straddled vehicle travels on a wet road surface, water on the road surface may be scattered in the width direction of the vehicle toward the terminal insertion hole. Thus, it is more difficult for water scattered in the width direction of the vehicle toward the terminal insertion hole to reach the terminal insertion hole.

The electric power supply socket includes a cap to open or close the terminal insertion hole and a hinge to be bent as the cap is opened or closed, and at least a portion of the hinge is disposed above the center line of the electric power supply socket.

According to this arrangement, the terminal insertion hole is opened and closed by the cap. It is thus possible to protect the terminal insertion hole from liquids such as rainwater or solids such as dust particles. Furthermore, since the hinge to be bent as the cap is opened or closed is located above the center line of the electric power supply socket, the cap is opened immediately above or obliquely upward relative to the terminal insertion hole. Thus, during use of the electric power supply socket, at least a portion of the cap is located above the terminal insertion hole. The water falling toward the terminal insertion hole during use of the electric power supply socket is blocked not only by the leg shield but also by the cap. This makes it difficult for water to reach the electric power supply socket during use of the electric power supply socket.

The electric power supply socket includes a tubular housing that surrounds the terminal insertion hole, and the housing includes a cylindrical portion that surrounds the terminal insertion hole, a bottom portion that closes a bottom of the cylindrical portion, and a drain hole that passes through at least one of the cylindrical and bottom portions and extends from the terminal insertion hole to a space outside the electric power supply socket.

According to this arrangement, the drain hole to discharge a liquid in the electric power supply socket is provided in the housing of the electric power supply socket. The housing includes the cylindrical portion that surrounds the terminal insertion hole, and the bottom portion that closes the bottom of the cylindrical portion. The drain hole penetrates at least one of the cylindrical and bottom portions and extends from the terminal insertion hole to a space outside the electric power supply socket. Even when a liquid such as rainwater enters the terminal insertion hole or water droplets are produced by condensation in the terminal insertion hole, the liquid in the terminal insertion hole is discharged through the drain hole. This enables the amount of liquid in the terminal insertion hole to be reduced.

The main switch extends obliquely forward and downward from the base toward a space in front of the leg shield.

According to this arrangement, the main switch is exposed on the base of the leg shield. The main switch extends obliquely forward and downward from the base toward the space in front of the leg shield. The distance in the up-down direction from the main switch to the electric power supply socket increases as the front end portion of the main switch corresponding to the lower end portion of the main switch is approached. The electrical wiring is connected to the electric power supply socket in the space in front of the leg shield and hangs down forward from the front end portion of the electric power supply socket. It is thus possible to expand a space that is capable of receiving the electrical wiring connected to the electric power supply socket, thus providing a higher degree of freedom in the layout of the electrical wiring.

At least a portion of the terminal insertion hole is located between a right vertical imaginary straight line that passes through a right end of the main switch and a left vertical imaginary straight line that passes through a left end of the main switch, in a rear view of the vehicle.

According to this arrangement, at least a portion of the terminal insertion hole is located at a position farther to the left than the right end of the main switch and farther to the right than the left end of the main switch, in a rear view of the vehicle. That is, at least a portion of the terminal insertion hole is located immediately above the main switch in a rear view of the vehicle. It is thus possible to compactly locate the main switch and the electric power supply socket in the width direction of the vehicle. This makes it possible to reduce the leg shield in size in the right-left direction.

At least a portion of the terminal insertion hole is located farther outward than the center line of the main switch in the width direction of the vehicle, in a rear view of the vehicle.

According to this arrangement, at least a portion of the terminal insertion hole is located immediately above the main switch in a rear view of the vehicle, and also located farther outward than the center line of the main switch in the width direction of the vehicle in a rear view of the vehicle. That is, at least a portion of the terminal insertion hole is shifted outward in the width direction of the vehicle with respect to the center line of the main switch in a rear view of the vehicle. Thus, when the main switch is operated, it is difficult for an electric device inserted into the terminal insertion hole to cause obstruction. Alternatively, it is difficult for the main switch to obstruct the insertion or removal of the electric device into or from the terminal insertion hole.

When the main switch includes a mechanical latch to be locked and unlocked by operating a mechanical key inserted into the key hole, the center line of the main switch refers to the rotational axis of the mechanical key. When the main switch includes an electronic latch to be locked and unlocked by operating an electronic key and the electronic latch includes a turn knob to be operated by the rider, the center line of the main switch refers to the rotational axis of the turn knob. When the electronic latch includes a push button to be depressed by the rider, the center line of the main switch refers to a straight line that is perpendicular to the center of the surface of the push button to make contact with a hand of the rider.

The terminal insertion hole is located at a position farther to the rear than a front end of the main switch and farther to the front than the rear end of the main switch, in a side view of the vehicle.

According to this arrangement, at least a portion of the terminal insertion hole is located immediately above the main switch in a side view of the vehicle. Thus, it is possible to compactly locate the main switch and the electric power supply socket in the front-rear direction. The leg shield is disposed behind the front cover that is located in front of the head pipe. A portion of the main switch and a portion of the electric power supply socket are disposed between the leg shield and the front cover. It is thus possible to reduce the leg shield and the front cover in size in the front-rear direction.

The distance from the upper end of the main switch to the rear end of the terminal insertion hole in the up-down direction of the vehicle is shorter than the distance from the rear end of the main switch to the rear end of the terminal insertion hole in the front-rear direction of the vehicle.

According to this arrangement, the distance in the up-down direction from the upper end of the main switch to the rear end of the terminal insertion hole is shorter than the distance in the front-rear direction from the rear end of the main switch to the rear end of the terminal insertion hole. As described above, since the distance in the up-down direction from the main switch to the electric power supply socket is shorter, it is possible to compactly locate the main switch and the electric power supply socket in the up-down direction. Furthermore, since the distance from the main switch to the electric power supply socket in the front-rear direction is longer, an electric device connected to the electric power supply socket and the electric power supply socket are further spaced away from the legs of the rider. It is thus possible to further enhance rider comfort.

At least a portion of the main switch is located at a position farther to the rear than a front end of the head pipe and farther to the front than a rear end of the head pipe, in a side view of the vehicle.

According to this arrangement, at least a portion of the main switch is located immediately above the head pipe in a side view of the vehicle. The leg shield is disposed behind the front cover that is located in front of the head pipe. A portion of the main switch is disposed between the leg shield and the front cover. Thus, compared with the case where the entirety of the main switch is located farther to the front or farther to the rear than the head pipe in a side view of the vehicle, it is possible to reduce the leg shield and the front cover in size in the front-rear direction.

The leg shield further includes a storage portion to accommodate an article. The storage portion is located on the same side as the main switch and the electric power supply socket relative to the head pipe in the width direction of the vehicle and includes an opening portion located below the terminal insertion hole.

According to this arrangement, the storage portion is provided on the leg shield. An article is placed in the storage portion through the opening of the storage portion. The opening of the storage portion is located on the same side as the main switch and the electric power supply socket relative to the head pipe and is disposed below the terminal insertion hole. When a smartphone placed in the storage portion is connected to the electric power supply socket through the power supply cable, the power supply cable does not pass through the vehicle center but hangs down from the electric power supply socket to the smartphone in the storage portion. Thus, compared with the case where the opening of the storage portion is disposed opposite to the main switch and the electric power supply socket relative to the vehicle center, it is difficult for the power supply cable to cause obstruction.

The above and other elements, features, steps, characteristics, and advantages of the present invention will become more apparent from the following detailed description of the preferred embodiments with reference to the attached drawings.

### BRIEF DESCRIPTION OF THE DRAWINGS

Fig. 1A is a left side view showing a straddled vehicle according to a first preferred embodiment.
Fig. 1B is a left side view showing the straddled vehicle where a portion of the straddled vehicle is simplified.
Fig. 2 is a rear view showing a leg shield and a configuration associated with the leg shield.
Fig. 3 is a front view showing a leg shield, a main switch, and an electric power supply socket.
Fig. 4 is a circuit diagram showing a schematic electric circuit of the straddled vehicle.
Fig. 5 is a rear view showing the leg shield, the main switch, and the electric power supply socket.
Fig. 6 is a cross-sectional view showing a vertical cross section of the leg shield and the electric power supply socket taken along line VI-VI shown in Fig. 5.
Fig. 7 is a partially enlarged view of Fig. 6.
Fig. 8 is a rear view showing the leg shield, the main switch, and the electric power supply socket.
Fig. 9 is a plan view showing the leg shield, the main switch, and the electric power supply socket.
Fig. 10 is a right side view showing the leg shield, the main switch, and the electric power supply socket.
Fig. 11 is a cross-sectional view showing a cross section of the electric power supply socket along a section including the center line of the electric power supply socket.
Fig. 12 is a cross-sectional view showing a cross section of the electric power supply socket taken along line XII-XII shown in Fig. 11.
Fig. 13 is a rear view showing a leg shield, a main switch, and an electric power supply socket according to a second preferred embodiment.
Fig. 14 is a right side view showing the leg shield, the main switch, and the electric power supply socket according to the second preferred embodiment.
Fig. 15 is a cross-sectional view showing a vertical cross section of the leg shield and the electric power supply socket taken along line XV-XV shown in Fig. 13.

### DETAILED DESCRIPTION OF THE PREFERRED EMBODIMENTS

Front-rear, up-down, and right-left directions are defined on the basis of a viewpoint of a forward-facing rider who sits on a straddled vehicle 1 in a reference posture in which the straddled vehicle 1 travels straight ahead on a horizontal plane (in which a steering handle 9 is disposed at a straight-traveling position). The straddled vehicle 1 in the reference posture will be hereinafter described unless specific notice is given.

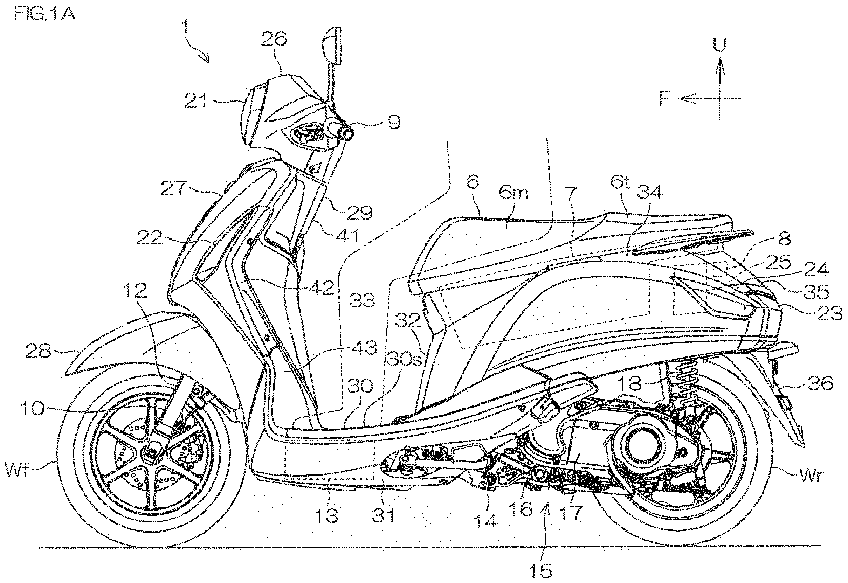

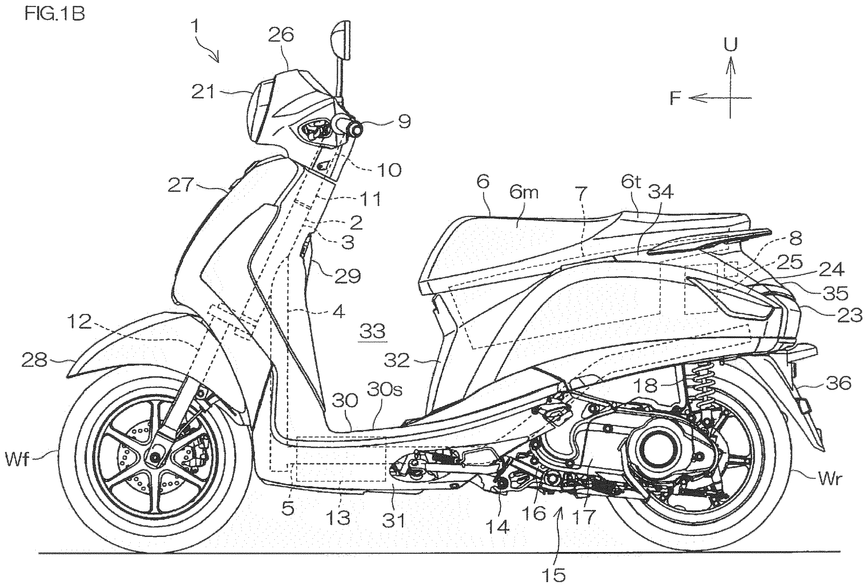

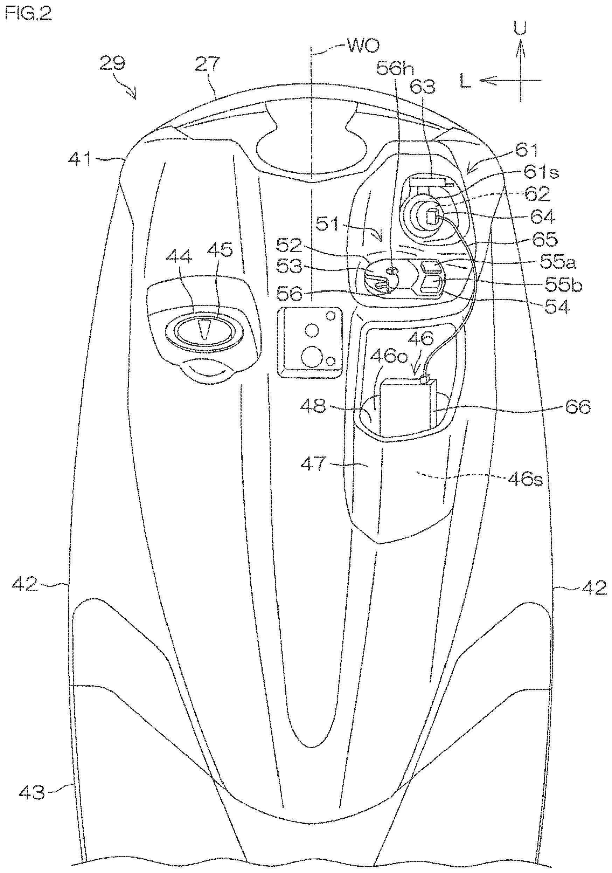

The right-left direction corresponds to a vehicle width direction (a width direction of the straddled vehicle 1). A vehicle center WO (refer to Fig. 2) corresponds to a vertical plane that passes through a center line of a head pipe 3 and that is perpendicular to a rotational center of a rear wheel Wr. "U" and "F" in Fig 1 represent an upper direction and a front direction of the straddled vehicle 1, respectively. "L" in Fig 2 represents a left direction of the straddled vehicle 1. The same applies to other figures. A plan view, a side view and a rear view mean a plan view, a side view and a rear view of the motorcycle 1, respectively unless specific notice is given.

Fig. 1A is a left side view showing the straddled vehicle 1 according to a first preferred embodiment. Fig. 1B is a left side view showing the straddled vehicle 1 where a portion of the straddled vehicle 1 is simplified.

As shown in Fig. 1A, the straddled vehicle 1 is a scooter, for example. As shown in Fig. 1B, the straddled vehicle 1 includes a frame 2 covered with an exterior cover. The frame 2 includes a head pipe 3 that extends obliquely rearward and upward, a down frame 4 that extends obliquely rearward and downward from the head pipe 3 and a pair of lower frames 5 that extends obliquely rearward and upward from the down frame 4. The front ends of the pair of lower frames 5 are disposed below the head pipe 3. The pair of lower frames 5 is disposed on the right side and on the left side of the vehicle center WO, respectively.

The straddled vehicle 1 includes a straddle seat 6 on which the rider sits. Figs. 1A and 1B shows an example where the seat 6 includes a main seat 6m on which the rider sits, and a tandem seat 6t on which a passenger sits. The seat 6 may be for one person. The seat 6 is disposed behind the head pipe 3. The seat 6 is disposed above the pair of lower frames 5. The seat 6 may be supported directly by the pair of lower frames 5 or may be supported indirectly by the pair of lower frames 5.

The straddled vehicle 1 includes a storage box 7 that is disposed under the seat 6. An opening provided in an upper end portion of the storage box 7 is opened and closed by the seat 6. The seat 6 is turnable upward and downward with respect to the storage box 7 between a closed position (position shown in Figs. 1A and 1B) at which the opening of the storage box 7 is closed by the seat 6 and an open position at which the opening of the storage box 7 is opened. When the seat 6 is lowered to the closed position, a rear end portion of the seat 6 is locked in the frame 2 by a seat lock device 8.

The straddled vehicle 1 includes a steering handle 9 steered by the rider and a front fork 10 to rotatably support a front wheel Wf. The front fork 10 that is an example of a front wheel support member includes a pair of fork pipes 12 which are disposed on the respective right and left sides of the front wheel Wf and a steering shaft 11 inserted in the head pipe 3. The steering shaft 11 is protruded upward from an upper end portion of the head pipe 3. The steering handle 9 is coupled to an upper end portion of the steering shaft 11. The steering handle 9 is disposed above the head pipe 3. Steering the steering handle 9 causes the front wheel Wf to turn rightward or leftward around the center line of the head pipe 3 together with the steering handle 9 and the front fork 10.

The straddled vehicle 1 includes a power unit 15 to rotate the rear wheel Wr. The power unit 15 includes an engine 16 which generates power to allow the straddled vehicle 1 to travel, and a drive mechanism 17 which transmits the power of the engine 16 to the rear wheel Wr. The engine 16 is an example of a prime mover. The prime mover may also be an electric motor. If the prime mover is the engine 16, then the straddled vehicle 1 includes a fuel tank 13 to store fuel to be supplied to the engine 16. The pair of lower frames 5 are disposed on the respective right and left sides of the fuel tank 13. The fuel tank 13 is disposed under a footboard 30 to be discussed later.

Fig. 1A and Fig. 1B show an example in which the power unit 15 is a swing unit that is swingable up and down relative to the frame 2. In the case of this example, the power unit 15 is mounted to the frame 2 through a pivot shaft 14 that extends in the vehicle width direction. The rear wheel Wr is rotatably supported by a rear end portion of the power unit 15. The rear wheel Wr and the power unit 15 are swingable up and down about the pivot shaft 14 relative to the frame 2. An upper end portion of a rear cushion 18 is mounted to the frame 2, while a lower end portion of the rear cushion 18 is mounted to the rear end portion of the power unit 15.

As shown in Fig. 1A, the straddled vehicle 1 includes a head lamp 21 which emits light forward, and two front flashers 22 that flash in response to an operation of the rider. The straddled vehicle 1 further includes a tail lamp 23 that emits light rearward, and two rear flashers 24 that flash in response to an operation of the rider. The head lamp 21 and the front flashers 22 are disposed farther to the front than the seat 6. The tail lamp 23 and the rear flashers 24 are located farther to the rear than the front end of the rear wheel Wr.

The straddled vehicle 1 includes a battery 25 to store power to be supplied to a plurality of electric devices included in the straddled vehicle 1. The power stored in the battery 25 is supplied to the plurality of electric devices included in the straddled vehicle 1 such as the head lamp 21 and the front flashers 22. The power generated in a power generator driven by the engine 16 is supplied to these electric devices and the battery 25. In this manner, the battery 25 is charged. The battery 25 is disposed between the storage box 7 and the tail lamp 23. The rear end portion of the seat 6 is disposed above the battery 25, while the rear wheel Wr is disposed below the battery 25.

The exterior cover of the straddled vehicle 1 includes a steering handle cover 26 that is disposed in front of and behind the steering handle 9, a front cover 27 disposed in front of the head pipe 3, and a leg shield 29 disposed behind the head pipe 3. The leg shield 29 is disposed between the head pipe 3 and the seat 6 in the front-rear direction. The seat 6 is disposed behind the leg shield 29. A front fender 28 of the exterior cover is disposed above the front wheel Wf. The front fender 28 is turned rightward and leftward together with the front wheel Wf. The steering handle cover 26 is turned rightward and leftward together with the steering handle 9.

The exterior cover includes the footboard 30 disposed above the pair of lower frames 5, a pair of underside covers 31 that are disposed on the respective right and left sides of the pair of lower frames 5, and a lower cover 32 disposed under the seat 6. The lower cover 32 is disposed behind the leg shield 29. The exterior cover defines a leg space 33, in which the feet and legs of the rider sitting on the seat 6 are accommodated, between the leg shield 29 and the lower cover 32 in the front-rear direction.

The feet of the rider sitting on the seat 6 are placed on a flat surface 30s provided on an upper surface of the footboard 30. The flat surface 30s intersects the vehicle center WO. The flat surface 30s may be a perfect planar surface with no recesses or projections or may also be substantially a planar surface which includes recesses or projections that will not obstruct the placement of feet (e.g., recesses or projections of approximately 1 to 2 cm). As shown in Fig. 1A, when a foot of the rider sitting on the seat 6 is placed on the flat surface 30s, the leg of the rider is disposed behind the leg shield 29. The leg of the rider and the rear surface of the leg shield 29 directly face each other in the front-rear direction.

The exterior cover includes a pair of right and left rear side covers 34 that are disposed on the respective right and left sides of the pair of lower frames 5, and a rear cover 35 disposed between rear end portions of the pair of rear side covers 34. The rear side covers 34 are disposed under the seat 6 in a side view. A rear fender 36 of the exterior cover extends from the rear side covers 34 obliquely rearward and downward in a side view. The rear fender 36 is disposed above and behind the rear wheel Wr.

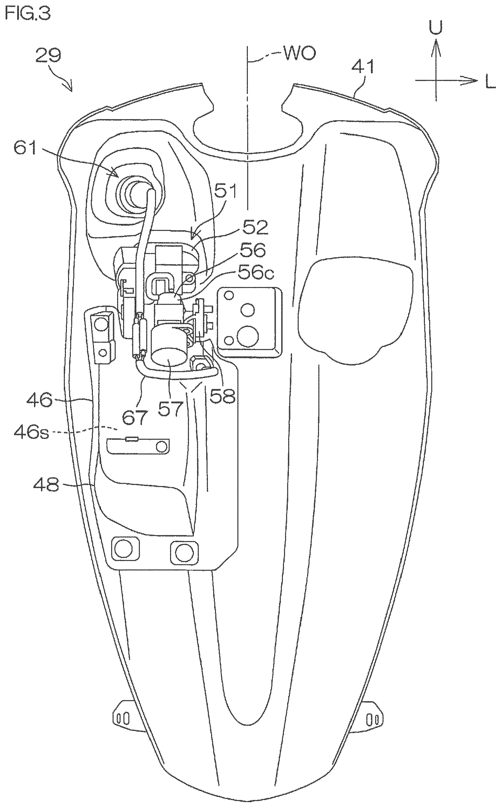

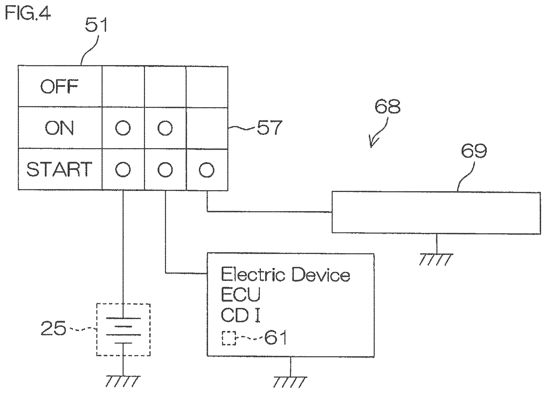

Fig. 2 is a rear view showing the leg shield 29 and a configuration associated with the leg shield 29. Fig. 3 is a front view showing the leg shield 29, a main switch 51, and an electric power supply socket 61. Fig. 4 is a circuit diagram showing a schematic electric circuit 68 of the straddled vehicle 1.

As shown in Fig. 2, the leg shield 29 includes a center shield 41 disposed behind the front cover 27, a pair of side shields 42 disposed on the respective right and left sides of the center shield 41, and a bottom shield 43 disposed under the center shield 41 and the pair of side shields 42. The center shield 41, the side shields 42, and the bottom shield 43 are all disposed in front of the legs of the rider sitting on the seat 6 so as to face the legs of the rider (see Fig. 1A).

The straddled vehicle 1 includes a base ring 44 that defines a fuel filler port, and a filler cap 45 to open and close the fuel filler port. The filler cap 45 is disposed on the left side of the head pipe 3 in rear view. The filler cap 45 is located on the leg shield 29 and exposed on the rear surface of the leg shield 29. The filler cap 45 is movable relative to the base ring 44 between an open position at which the fuel filler port is opened and a closed position at which the fuel filler port is closed (the position shown in Fig. 2). The filler cap 45 is locked at the closed position by a hook provided on the filler cap 45.

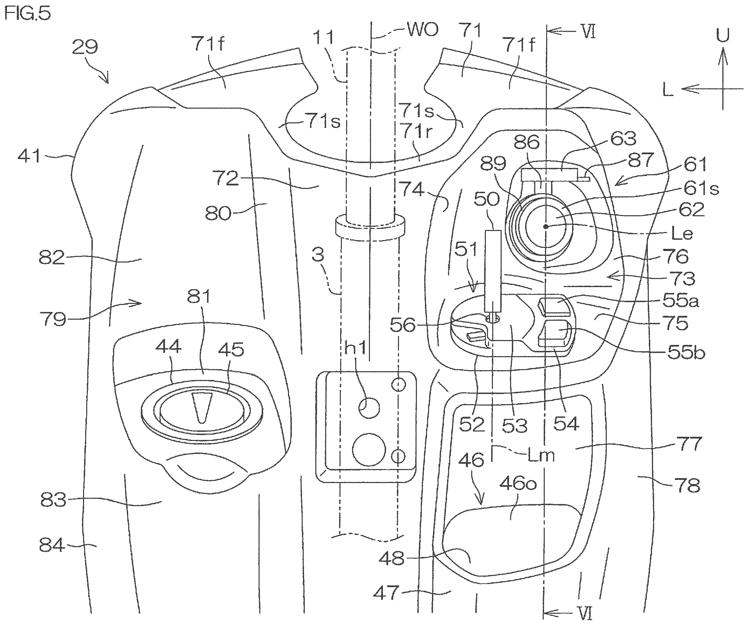

The straddled vehicle 1 includes the main switch 51 that is operated by the rider when starting the plurality of electric devices and the engine 16 which are included in the straddled vehicle 1. The main switch 51 includes a latch 56 that includes a key hole 56h into which a main key 50 (see Fig. 5) is inserted, and a switch panel 52 that includes a through-hole to expose the key hole 56h. The main switch 51 may include a fuel button 55a to be depressed by the rider when the rider unlocks the filler cap 45, and a seat button 55b to be depressed by the rider when the rider unlocks the seat 6.

The latch 56, the fuel button 55a, and the seat button 55b are provided on the switch panel 52. The switch panel 52 includes a main panel 53 on which the latch 56 is mounted and a sub-panel 54 on which the fuel button 55a and the seat button 55b are mounted. The fuel button 55a and the seat button 55b are located around the key hole 56h. Fig. 2 shows an example in which the fuel button 55a and the seat button 55b are located on the right side of the key hole 56h in rear view, and the fuel button 55a and the seat button 55b are aligned side by side in the up-down direction in rear view.

The main panel 53, the sub-panel 54, the latch 56, the fuel button 55a, and the seat button 55b are located on the right side of the head pipe 3. The main panel 53 and the sub-panel 54 are located on the leg shield 29 and exposed on the rear surface of the leg shield 29. Likewise, the latch 56, the fuel button 55a, and the seat button 55b are located on the leg shield 29 and exposed on the rear surface of the leg shield 29. The main switch 51 penetrates the leg shield 29. A lower end portion of the main switch 51 that corresponds to a front end portion of the main switch 51 is located in a space between the leg shield 29 and the front cover 27.

As shown in Fig. 3, the main key 50 includes a select switch 57 which is switched over a plurality of states. The select switch 57 corresponds to a power supply switch and a start switch. The power supply switch opens and closes the electric circuit 68 included in the straddled vehicle 1 (see Fig. 4). The start switch rotates a starter motor 69 (see Fig. 4) and thereby starts the engine 16. The select switch 57 is located in the space between the leg shield 29 and the front cover 27. The latch 56 extends upward from the select switch 57. The switching of the select switch 57 is locked by the latch 56.

For example, the latch 56 of the main switch 51 is a cylinder lock. The cylinder lock includes a columnar rotor having an end surface on which provided is the key hole 56h into which the main key 50 is inserted, and a cylinder case 56c, which is columnar, to accommodate the rotor. The rotor is rotatable relative to the cylinder case 56c about a center line Lm of the main switch 51 (the center line of the rotor) and capable of stopping at a plurality of positions including an OFF position, an ON position, and a START position. When the main key 50 is not inserted in the key hole 56h, the rotor is locked at the OFF position. When the main key 50 is inserted into the key hole 56h, the rotor is unlocked.

As shown in Fig. 4, the state of the select switch 57 of the main switch 51 is switched over in response to the rotational angle of the rotor. When the rider turns the main key 50 inserted in the key hole 56h from the OFF position to the ON position, the select switch 57 is switched from an OFF state to an ON state to close the electric circuit 68 of the straddled vehicle 1. This allows the power of the battery 25 to be supplied to the plurality of electric devices included in the straddled vehicle 1. After that, when the rider turns the main key 50 inserted in the key hole 56h from the ON position to the START position, the select switch 57 is switched from the ON state to a START state to turn the starter motor 69. In this manner, the engine 16 is started (activated).

For example, the plurality of electric devices provided in the straddled vehicle 1 include an ECU (Electronic Control Unit) to control the straddled vehicle 1 and a CDI (Capacitor Discharge Ignition) unit for ignition control. The electric power supply socket 61 to be discussed later is also included in the plurality of electric devices. The electric power supply socket 61 is connected to the battery 25 through the electric circuit 68. When the select switch 57 is switched from the OFF state to the ON state, a circuit interposed between the electric power supply socket 61 and the battery 25 is closed.

As shown in Fig. 2, the leg shield 29 includes a storage portion 46 to accommodate articles. The storage portion 46 includes a ring-shaped opening portion 46o through which articles pass in the up-down direction, and cylindrical portions 47 to 48 which define a storing space 46s in which an article placed through the opening portion 46o is located. The storage portion 46 is located on the right side of the head pipe 3. At least a portion of the storage portion 46 is disposed under the switch panel 52 of the main switch 51 in rear view. The opening portion 46o of the storage portion 46 is not covered with a lid but exposed on the rear surface of the leg shield 29.

The cylindrical portions 47 to 48 include an outer portion 47 located behind the storing space 46s, and an inner portion 48 located in front of the outer portion 47. The storing space 46s of the storage portion 46 is defined by the outer portion 47 and the inner portion 48. The outer portion 47 is a portion of the center shield 41. As shown in Fig. 3, the inner portion 48 is a separate member that is attached to the center shield 41 and different from the center shield 41. The inner portion 48 may be integral with the center shield 41. The outer portion 47 may be a separate member that is attached to the center shield 41 and different from the center shield 41.

As shown in Fig. 2, the straddled vehicle 1 includes the electric power supply socket 61 that supplies DC power stored in the battery 25. The electric power supply socket 61 is located on the right side of the head pipe 3. At least a portion of the electric power supply socket 61 is located above the main switch 51 in rear view. The electric power supply socket 61 is located on the leg shield 29 and exposed on the rear surface of the leg shield 29. The electric power supply socket 61 penetrates the leg shield 29 in the front-rear direction. As shown in Fig. 3, the front end portion of the electric power supply socket 61 is located in a space in front of the leg shield 29. An electrical wiring 67 connecting the electric power supply socket 61 and the battery 25 is connected to the front end portion of the electric power supply socket 61.

As shown in Fig. 2, part of the main switch 51 and a portion of the electric power supply socket 61 are located on the rear surface of the leg shield 29. The main switch 51 and the electric power supply socket 61 are protruded from the rear surface of the leg shield 29. A portion of the main switch 51 and a portion of the electric power supply socket 61 are located outside the leg shield 29. The rear surface of the leg shield 29 is a portion of the outer surface of the leg shield 29. Thus, the main switch 51 and the electric power supply socket 61 are exposed on the outer surface of the leg shield 29.

The electric power supply socket 61 includes an end surface 61s that includes a terminal insertion hole 62 into which a terminal of an electric device is inserted, and a cap 63 that opens and closes the terminal insertion hole 62. Fig. 2 shows a state in which the cap 63 is opened. The terminal of an electric device to be inserted into the terminal insertion hole 62 may be a terminal of an electric device itself such as a socket charger; may also be a terminal of an adapter provided with a hole that matches a terminal of an electric device or a power supply cable; or may also be a terminal of a power supply cable to connect an electric device and the electric power supply socket 61.

Fig. 2 shows an example in which an adapter 64 that is an example of an electric device is inserted in the terminal insertion hole 62, and a smartphone 66 is connected to the electric power supply socket 61 through a USB (Universal Serial Bus) cable 65, i.e., an example of a power supply cable. In this example, the smartphone 66 is held inside the storage portion 46 located below the electric power supply socket 61. The USB cable 65 extends from the adapter 64 to the smartphone 66 through the space on the right of the main switch 51 in rear view. The terminal (USB connector) of the USB cable 65 is inserted into a USB port provided on the adapter 64.

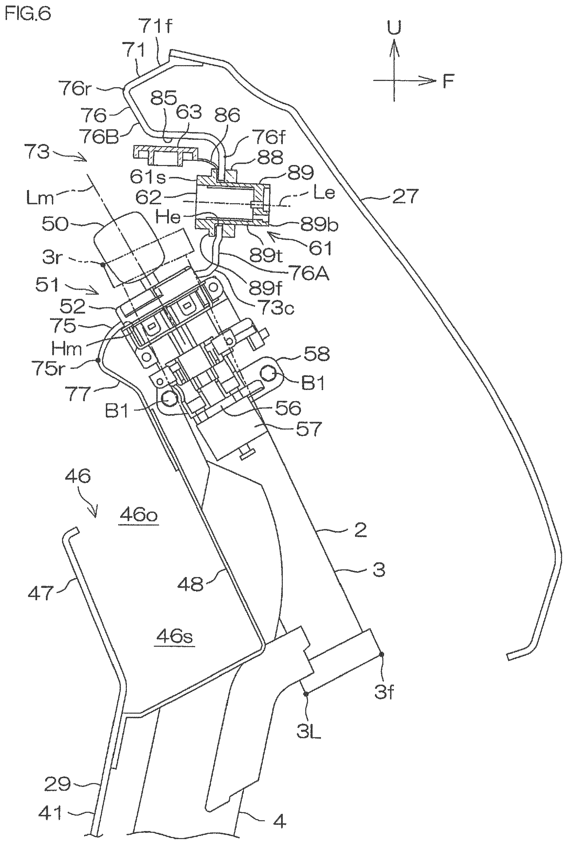

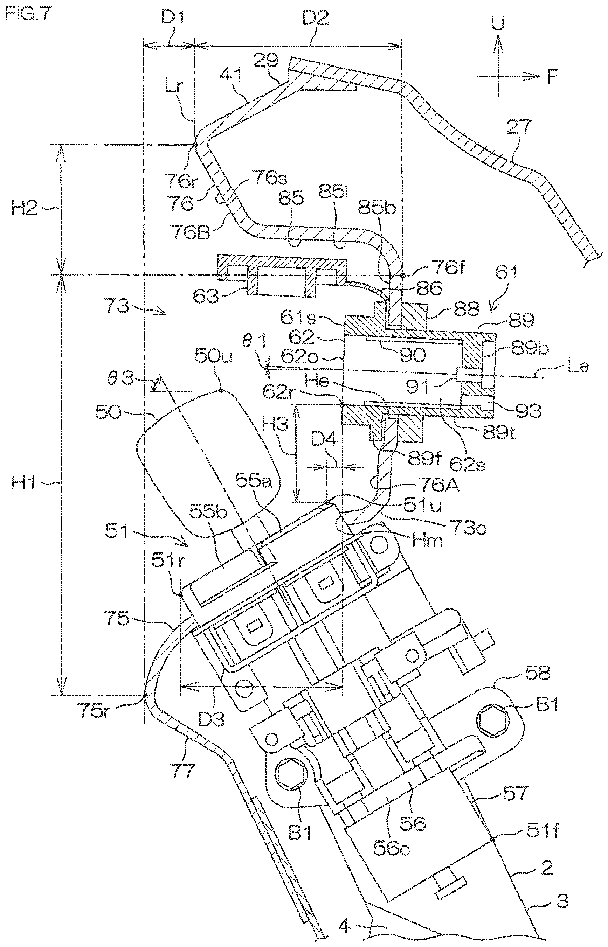

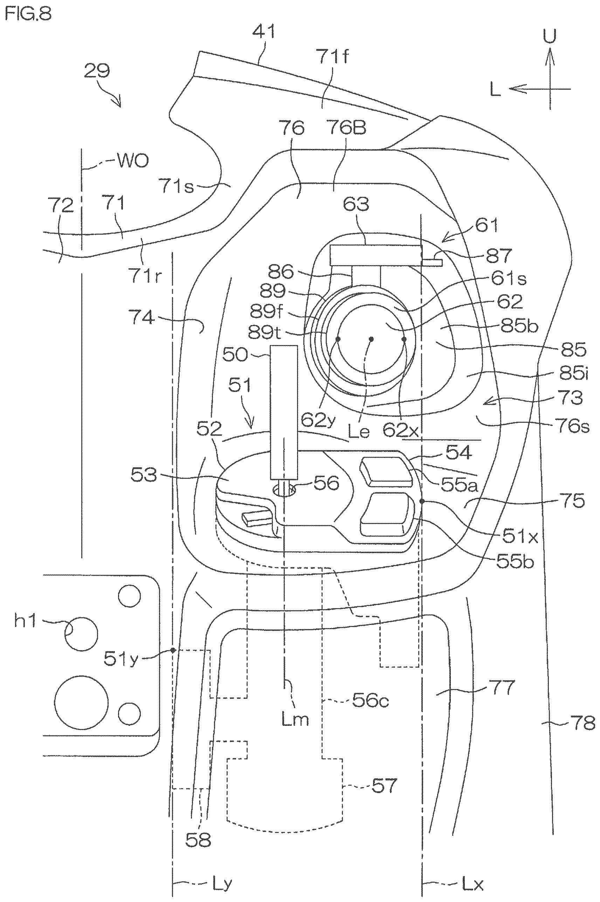

Fig. 5 is a rear view showing the leg shield 29, the main switch 51, and the electric power supply socket 61. Fig. 6 is a cross-sectional view showing a vertical cross section of the leg shield 29 and the electric power supply socket 61 taken along line VI-VI shown in Fig. 5. Fig. 7 is a partially enlarged view of Fig. 6. Fig. 8, Fig. 9, and Fig. 10 are a rear view, a plan view, and a right side view which show the leg shield 29, the main switch 51, and the electric power supply socket 61, respectively.

As shown in Fig. 5, the leg shield 29 includes an upper wall 71 located around the steering shaft 11. The upper wall 71 includes a rear portion 71r disposed behind the steering shaft 11, a pair of side portions 71s disposed on the respective right and left sides of the steering shaft 11, and a front portion 71f that is located farther to the front than the steering shaft 11 and extends outward from the pair of side portions 71s in the vehicle width direction.

The leg shield 29 further includes a center wall 72 that is located behind the head pipe 3. The center wall 72 extends downward from the rear portion 71r of the upper wall 71. The center wall 72 extends downward from the upper end surface of the upper wall 71 that corresponds to the upper end surface of the leg shield 29. The center wall 72 overlaps the head pipe 3 and the steering shaft 11 in rear view. The bolt to bolt the leg shield 29 to the head pipe 3 is inserted into a through-hole h1 that penetrates the center wall 72 in the front-rear direction. The through-hole h1 is located in the vehicle center WO.

In addition to the upper wall 71 and the center wall 72, the leg shield 29 further includes a right recess 73 and a left recess 79 that are concaved forward from the rear surface of the center wall 72 that overlaps the head pipe 3 in rear view. The right recess 73 is located on the right side of the head pipe 3 and the steering shaft 11. The right recess 73 overlaps the head pipe 3 and the steering shaft 11 in a side view. The left recess 79 is located on the left side the head pipe 3 and the steering shaft 11. The right recess 73 and the left recess 79 are each opened rearward as well as opened upward. The right recess 73 is also opened rightward. The left recess 79 is also opened leftward.

The leg shield 29 includes a right inner wall 74 extending forward from a right end portion of the center wall 72, a right base 75 extending outward from a lower end portion of the right inner wall 74 in the vehicle width direction, and a right front wall 76 extending upward from a front end portion of the right base 75. The leg shield 29 further includes a right rear wall 77 extending downward from a rear end portion of the right base 75, and a right outer wall 78 extending downward from a right end portion of the right base 75. The right recess 73 is defined by the right inner wall 74, the right base 75, and the right front wall 76. The right base 75 corresponds to a bottom portion of the right recess 73 in the up-down direction.

The leg shield 29 includes a left inner wall 80 extending forward from a left end portion of the center wall 72, a left base 81 extending outward from a lower end portion of the left inner wall 80 in the vehicle width direction, and a left front wall 82 extending upward from a front end portion of the left base 81. The leg shield 29 further includes a left rear wall 83 extending downward from a rear end portion of the left base 81, and a left outer wall 84 extending downward from a left end portion of the left base 81. The left recess 79 is defined by the left inner wall 80, the left base 81, and the left front wall 82. The left base 81 corresponds to a bottom portion of the left recess 79 in the up-down direction.

The right inner wall 74, the right base 75, the right front wall 76, the right rear wall 77, and the right outer wall 78 are located on the right side of the vehicle center WO. The left inner wall 80, the left base 81, the left front wall 82, the left rear wall 83, and the left outer wall 84 are located on the left side of the vehicle center WO. The right inner wall 74 is located on the right side of the head pipe 3 and the steering shaft 11, and overlaps the head pipe 3 and the steering shaft 11 in a side view. Likewise, the left inner wall 80 is located on the left side of the head pipe 3 and the steering shaft 11, and overlaps the head pipe 3 and the steering shaft 11 in a side view.

The switch panel 52 of the main switch 51 is mounted to the right base 75. The electric power supply socket 61 is mounted to the right front wall 76. The filler cap 45 is mounted to the left base 81. The right base 75 is located above the through-hole h1 of the leg shield 29 in rear view. A portion of the left base 81 located at the same height as that of the through-hole h1 of the leg shield 29. At least a portion of the right base 75 is located above the left base 81 in rear view. The filler cap 45 is located below the switch panel 52 in rear view.

As shown in Fig. 6, the right base 75 extends forward from the right rear wall 77. The right base 75 extends upward from the right rear wall 77. The right front wall 76 extends upward from the front end of the right base 75. The right front wall 76 includes a front portion 76A extending upward from the front end of the right base 75, and a ceiling wall 76B extending rearward from the front portion 76A.

The ceiling wall 76B is overhung rearward from the front portion 76A. A rear end of the ceiling wall 76B corresponds to a rear end 76r of the right front wall 76. The rear end 76r of the right front wall 76 is located farther to the rear than the front portion 76A. Furthermore, the rear end 76r of the right front wall 76 is located at a position farther to the rear than the front end of the base 75 and higher than the front end of the base 75. The right front wall 76 is integral with the right base 75 and communicates with the right base 75. The front end portion of the right base 75 and a lower end portion of the right front wall 76 define a corner portion 73c having an arc-shaped vertical cross section.

The rear end 76r of the right front wall 76 corresponds to the upper end of the right front wall 76. The rear end 76r of the right front wall 76 is located above a rear end 75r of the right base 75. The rear end 76r of the right front wall 76 is also located farther to the front than the rear end 75r of the right base 75. The front end 76f of the right front wall 76 is located at a position lower than the rear end 76r of the right front wall 76 and higher than the rear end 75r of the right base 75.

As shown in Fig. 7, the distance H1 in the up-down direction from the rear end 75r of the right base 75 to the front end 76f of the right front wall 76 is longer than the distance H2 in the up-down direction from the front end 76f of the right front wall 76 to the rear end 76r of the right front wall 76. The distance D1 in the front-rear direction from the rear end 75r of the right base 75 to the rear end 76r of the right front wall 76 is shorter than the distance D2 in the front-rear direction from the rear end 76r of the right front wall 76 to the front end 76f of the right front wall 76. The distance H1 may be shorter than the distance H2 and may also be equal to the distance H2. The distance D1 may be longer than the distance D2 and may also be equal to the distance D2.

As described above, the main switch 51 includes the latch 56, the switch panel 52, the fuel button 55a, the seat button 55b, and the select switch 57. In addition to these, the main switch 51 further includes a bracket 58 into which a bolt B1 is inserted to bolt the latch 56 to the head pipe 3. The bracket 58 is located in a space between the leg shield 29 and the front cover 27. The select switch 57 and the bracket 58 are hidden by the exterior cover including the leg shield 29 and the front cover 27.

The main switch 51 is protruded upward from a through-hole Hm that penetrates the right base 75 of the leg shield 29. The main switch 51 extends obliquely downward and forward from the right base 75. In other words, the center line Lm of the main switch 51 extends obliquely downward and forward in a side view. The center line Lm of the main switch 51 may be horizontal or vertical in a side view. The center line Lm of the main switch 51 may be tilted with respect to the vehicle center WO in a plan view or may also be parallel to the vehicle center WO in a plan view.

Similar to the main switch 51, the head pipe 3 extends obliquely downward and forward in a side view. As shown in Fig. 6, the latch 56, the switch panel 52, the fuel button 55a, the seat button 55b, the select switch 57, and the bracket 58 are located farther to the rear than a front end 3f of the head pipe 3 in a side view. The latch 56, the switch panel 52, the fuel button 55a, the seat button 55b, the select switch 57, and the bracket 58 are also located farther to the rear than a lower end 3L of the head pipe 3 in a side view. The select switch 57 and the bracket 58 are located farther to the front than the rear end 3r of the head pipe 3 in a side view.

The electric power supply socket 61 includes a tubular housing 89 that surrounds the terminal insertion hole 62, a lock nut 88 to secure the housing 89 to the leg shield 29, and a hinge 86 to couple the cap 63 to the housing 89. The terminal insertion hole 62 is opened on the end surface 61s of the housing 89. As shown in Fig. 7, the terminal insertion hole 62 includes an opening 62o located on the same plane as the end surface 61s of the housing 89, and an inner space 62s that extends from the opening 62o toward the inside of the housing 89 in the axial direction of the electric power supply socket 61 (in the direction of a center line Le of the electric power supply socket 61).

The opening 62o of the terminal insertion hole 62 of the electric power supply socket 61 does not overlap the exterior cover such as the leg shield 29 in rear view. In other words, the exterior cover such as the leg shield 29 is not located behind the opening 62o of the terminal insertion hole 62, and does not overlap the opening 62o of the terminal insertion hole 62 in the front-rear direction. As shown in Fig. 8, the opening 62o of the terminal insertion hole 62 is visible in rear view. The electric power supply socket 61 is not located in the storage portion of the straddled vehicle 1.

As shown in Fig. 7, the housing 89 is inserted into a through-hole He that penetrates the right front wall 76 of the leg shield 29. The end surface 61s, the cap 63, and the hinge 86 are located behind the right front wall 76 and exposed on a rear surface 76s of the right front wall 76. The opening 62o of the terminal insertion hole 62 is located behind the right front wall 76. The inner space 62s of the terminal insertion hole 62 passes through the through-hole He. The lock nut 88 is located in front of the right front wall 76 and hidden by the right front wall 76 in rear view.

The housing 89 includes a cylindrical portion 89t to surround the terminal insertion hole 62, a bottom portion 89b to close the bottom of the cylindrical portion 89t, and a ring-shaped flange 89f to be protruded outward from the cylindrical portion 89t. The cylindrical portion 89t is inserted into the through-hole He that penetrates the right front wall 76 of the leg shield 29. The flange 89f is located behind the right front wall 76. A female screw provided on the inner circumferential surface of the lock nut 88 is attached to a male screw provided on the outer circumferential surface of the cylindrical portion 89t. The right front wall 76 is sandwiched between the flange 89f and the lock nut 88. This allows the housing 89 to be secured to the leg shield 29.

As shown in Fig. 5, the electric power supply socket 61 further includes a tab 87 that is pinched with the thumb and a finger of the rider when the rider moves the cap 63. The tab 87 is protruded from the outer edge of the cap 63. Likewise, the hinge 86 is protruded from the outer edge of the cap 63. Fig. 5 shows a state in which the terminal insertion hole 62 is opened. When the terminal insertion hole 62 is closed with the cap 63, the tab 87 is located below the hinge 86. At least a portion of the hinge 86 is located above the center line Le of the electric power supply socket 61. Fig. 5 shows an example in which the entirety of the hinge 86 is located above the center line Le of the electric power supply socket 61.

As shown in Fig. 6, to open and close the terminal insertion hole 62, the cap 63 is moved in the up-down direction relative to the terminal insertion hole 62. The hinge 86 is bent as the cap 63 is opened or closed. When the terminal insertion hole 62 is opened, that is, when the terminal insertion hole 62 is not covered with the cap 63, at least a portion of the cap 63 is disposed above the terminal insertion hole 62. At the time, at least a portion of the cap 63 is disposed farther to the rear than the terminal insertion hole 62.

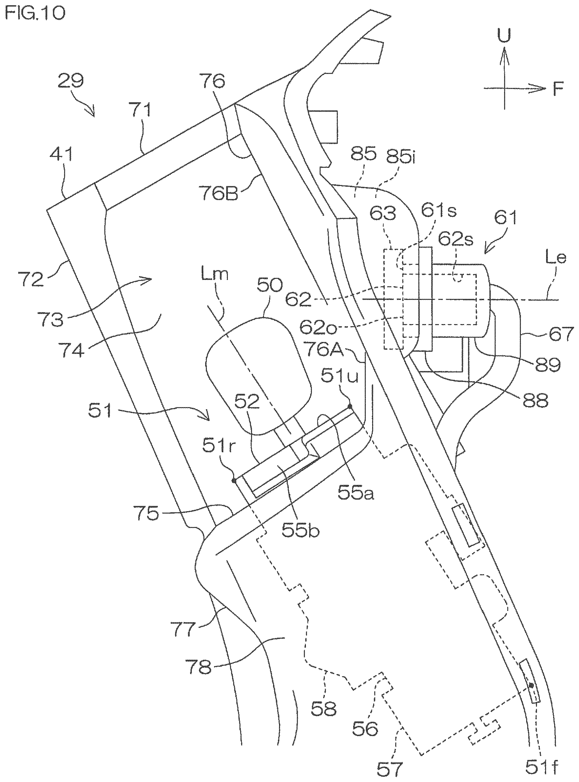

As shown in Fig. 8, the electric power supply socket 61 is located inside a recess 85 provided on the right front wall 76. The recess 85 is located farther outward than the center line Lm of the main switch 51 in the vehicle width direction. The recess 85 includes a bottom surface 85b located farther to the front than the rear surface 76s of the right front wall 76, and an inner peripheral surface 85i extending forward from the rear surface 76s of the right front wall 76 to the bottom surface 85b. The electric power supply socket 61 is inserted into the through-hole He (see Fig. 7) that penetrates the bottom surface 85b of the recess 85 in the front-rear direction. The entirety of the opening 62o of the terminal insertion hole 62 is located inside the recess 85, and is hidden by the inner peripheral surface 85i of the recess 85 in a side view (see Fig. 10).

Fig. 7 shows an example in which the center line Le of the electric power supply socket 61 extends obliquely rearward and upward in a side view. In other words, the center line Le of the electric power supply socket 61 extends obliquely rearward and upward in the front-rear direction. The center line Le of the electric power supply socket 61 extends obliquely rearward and upward from the electric power supply socket 61. In this example, the terminal insertion hole 62 of the electric power supply socket 61 is oriented upward in rear view. The center line Le of the electric power supply socket 61 may also extend horizontally in a side view.

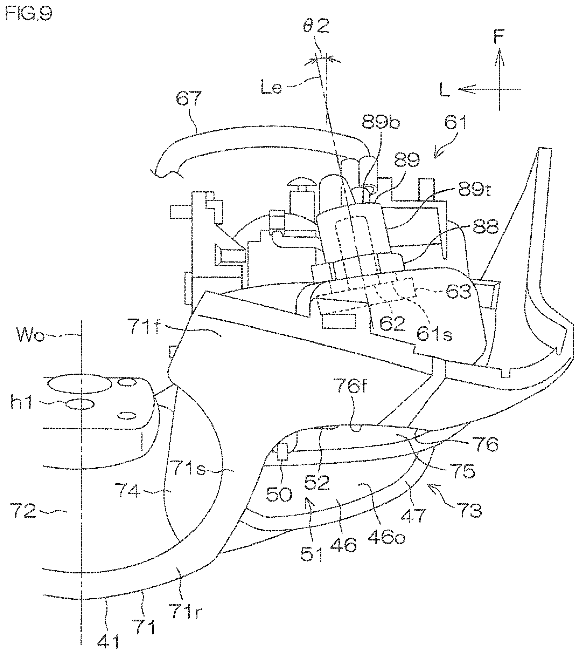

The center line Le of the electric power supply socket 61 may be tilted relative to the vehicle center WO in a plan view (see Fig. 5), or may also be parallel to the vehicle center WO in a plan view. Fig. 9 shows an example in which the center line Le of the electric power supply socket 61 extends obliquely rearward and rightward in a plan view. The terminal insertion hole 62 of the electric power supply socket 61 is oriented toward the rider, thus taking into account the operability of the electric power supply socket 61.

As shown in Fig. 7, the center line Le of the electric power supply socket 61 is tilted at a tilt angle θ1 relative to a horizontal plane. As shown in Fig. 9, the center line Le of the electric power supply socket 61 is tilted at a tilt angle θ2 relative to a vertical plane that is parallel to the vehicle center WO. The tilt angle θ1 of the electric power supply socket 61 is smaller than the tilt angle θ2 of the electric power supply socket 61. The tilt angle θ1 may be greater than the tilt angle θ2 or may also be equal to the tilt angle θ2. However, from the viewpoint of ensuring the operability of the electric power supply socket 61, the terminal insertion hole 62 is desirably oriented toward the rider.

As shown in Fig. 7, the center line Lm of the main switch 51 is tilted at a tilt angle θ3 relative to a horizontal plane. The tilt angle θ1 of the electric power supply socket 61 is smaller than the tilt angle θ3 of the main switch 51. Likewise, the tilt angle θ2 of the electric power supply socket 61 (see Fig. 9) is smaller than the tilt angle θ3 of the main switch 51. The tilt angle θ1 may be greater than the tilt angle θ3 or may also be equal to the tilt angle θ3. Likewise, the tilt angle θ2 may be greater than the tilt angle θ3 or may also be equal to the tilt angle θ3.

As shown in Fig. 8, at least a portion of the terminal insertion hole 62 is located immediately above the main switch 51 in rear view. In other words, at least a portion of the terminal insertion hole 62 is located in rear view between a right vertical imaginary straight-line Lx that passes through a right end 51x of the main switch 51 and a left vertical imaginary straight-line Ly that passes through a left end 51y of the main switch 51. At least a portion of the terminal insertion hole 62 is located farther outward than the center line Lm of the main switch 51 in the vehicle width direction in rear view. At least a portion of the terminal insertion hole 62 is located immediately below the ceiling wall 76B in rear view. At least a portion of the ceiling wall 76B is located at a position farther to the right than a left end 62y of the terminal insertion hole 62 and farther to the left than a right end 62x of the terminal insertion hole 62.

As shown in Fig. 9, any portion of the terminal insertion hole 62 overlaps the right front wall 76 in a plan view, and is hidden by the right front wall 76 in a plan view. A portion of the switch panel 52 overlaps the right front wall 76 in a plan view and is hidden by the right front wall 76 in a plan view. The rear end of the switch panel 52 is located farther to the rear than the rear edge of the upper end surface of the leg shield 29 in a plan view (the rear edge of the upper end surface of the upper wall 71) and visible in a plan view. The rear end of the switch panel 52 may be located farther to the front than the rear edge of the upper end surface of the leg shield 29 in a plan view.

As shown in Fig. 10, at least a portion of the terminal insertion hole 62 overlaps the right front wall 76 in a side view and is hidden by the right front wall 76 in a side view. The cap 63 also overlaps the right front wall 76 in a side view and is hidden by the right front wall 76 in a side view. In contrast to this, the switch panel 52 is not covered with the right front wall 76 in a side view and visible in a side view. The switch panel 52 is located on the right side of the right inner wall 74 of the leg shield 29 and overlaps the right inner wall 74 in a side view.

As described above, the right front wall 76 of the leg shield 29 includes the front portion 76A extending upward from the right base 75, and the ceiling wall 76B extending rearward from the front portion 76A. As shown in Fig. 7, the front portion 76A is located farther to the front than a rear end 51r of the main switch 51. Furthermore, the front portion 76A is located farther to the front than the opening 62o of the terminal insertion hole 62 that is located on the same plane as the end surface 61s of the housing 89. The ceiling wall 76B is located above the terminal insertion hole 62. The rear end of the ceiling wall 76B corresponds to the rear end 76r of the right front wall 76.

The rear end 76r of the right front wall 76 of the leg shield 29 corresponds to the upper end of the right front wall 76. The terminal insertion hole 62 is located at a position lower than the rear end 76r of the right front wall 76 and farther to the front than the rear end 76r of the right front wall 76. The terminal insertion hole 62 is located farther to the front than a vertical imaginary straight line Lr that passes through the rear end 76r of the right front wall 76 in a side view. Even when the cap 63 of the electric power supply socket 61 is located at any position from the closed position to the pen position, the cap 63 is disposed at a position lower than the rear end 76r of the right front wall 76 and farther to the front than the rear end 76r of the right front wall 76.

The terminal insertion hole 62 is located at a position farther to the rear than a front end 51f of the main switch 51 and farther to the front than the rear end 51r of the main switch 51. The terminal insertion hole 62 is located at a position farther to the front than the switch panel 52 and higher than the switch panel 52. An upper end 50u of the main key 50 inserted in the main switch 51 is located above a rear end 62r of the terminal insertion hole 62. An upper end 51u of the main switch 51 corresponding to the upper end of the switch panel 52 is located at a position farther to the rear than the rear end 62r of the terminal insertion hole 62 and lower than the rear end 62r of the terminal insertion hole 62.

The distance H3 from the upper end 51u of the main switch 51 to the rear end 62r of the terminal insertion hole 62 in the up-down direction is shorter than the distance D3 from the rear end 51r of the main switch 51 corresponding to the rear end of the switch panel 52 to the rear end 62r of the terminal insertion hole 62 in the front-rear direction. The distance H3 is longer than the distance D4 from the upper end 51u of the main switch 51 to the rear end 62r of the terminal insertion hole 62 in the front-rear direction. The distance H3 may be longer than the distance D3 or may also be equal to the distance D3. The distance H3 may be shorter than the distance D4 or may also be equal to the distance D4.

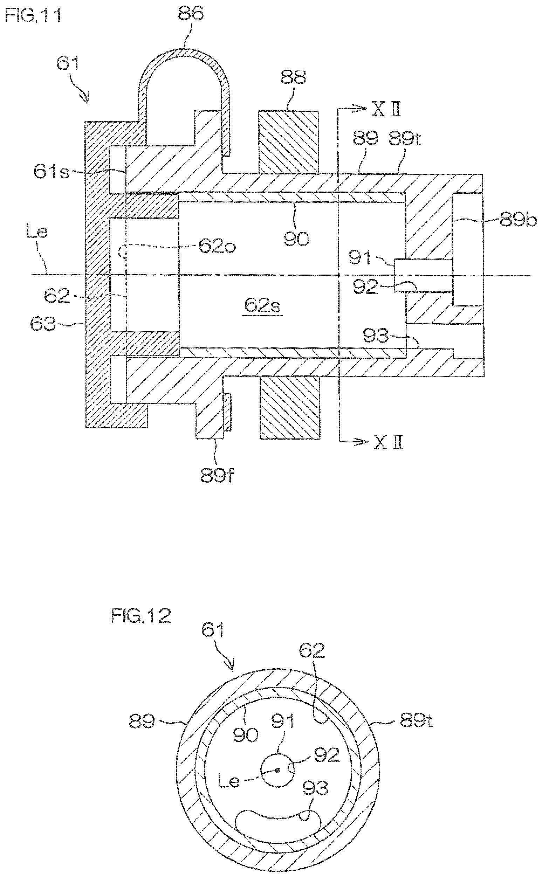

Fig. 11 is a cross-sectional view showing a cross section of the electric power supply socket 61 taken along a section including the center line Le of the electric power supply socket 61. Fig. 12 is a cross-sectional view showing a cross section of the electric power supply socket 61 taken along line XII-XII shown in Fig. 11. As can be seen by comparing Fig. 7 with Fig. 11, the posture of the electric power supply socket 61 shown in Fig. 11 is different from that of the electric power supply socket 61 when the electric power supply socket 61 is mounted to the leg shield 29.

As shown in Fig. 11, the electric power supply socket 61 includes a tubular inner circumference terminal 90 disposed on the inner circumferential surface of the housing 89 (the inner circumferential surface of the cylindrical portion 89t), and a bottom terminal 91 disposed on the bottom surface of the housing 89 (the bottom surface of the bottom portion 89b). The inner circumference terminal 90 and the bottom terminal 91 are both made of metal. The housing 89 is made of an insulating material such as resin.

One of the inner circumference terminal 90 and the bottom terminal 91 is a plus terminal, while the other of the inner circumference terminal 90 and the bottom terminal 91 is a minus terminal. The charge supplied from the battery 25 (see Fig. 4) flows between the inner circumference terminal 90 and the bottom terminal 91 through an electric device connected to the electric power supply socket 61. In this manner, the power of the battery 25 is supplied to the electric device.

The housing 89 of the electric power supply socket 61 includes a drain hole 93 that penetrates the bottom portion 89b in the axial direction of the electric power supply socket 61 (in the direction of the center line Le of the electric power supply socket 61) in addition to the cylindrical portion 89t, the bottom portion 89b, and the flange 89f. The bottom terminal 91 is inserted into a center hole 92 that penetrates a center portion of the bottom portion 89b in the axial direction of the electric power supply socket 61, and exposed at the center portion of the bottom portion 89b.

As shown in Fig. 12, when the electric power supply socket 61 is viewed in the axial direction of the electric power supply socket 61, the drain hole 93 is positioned around the bottom terminal 91. When the electric power supply socket 61 is mounted to the leg shield 29, the drain hole 93 is preferably located under the bottom portion 89b (see Fig. 7). When the electric power supply socket 61 is viewed in the axial direction of the electric power supply socket 61, the area of the drain hole 93 may be greater or smaller than that of the bottom terminal 91 or may also be equal to the area of the bottom terminal 91.

As described above, in the present preferred embodiment, the main switch 51 is located on the right side of the head pipe 3. When the main switch 51 is operated, the electric circuit 68 of the straddled vehicle 1 is closed and power is thereby supplied to an electric device included in the straddled vehicle 1. The electric power supply socket 61 to which an electric device such as a socket charger or a power supply cable is connected is disposed on the same side as the main switch 51 relative to the head pipe 3. The main switch 51 and the electric power supply socket 61 are located on the leg shield 29 that faces the rider sitting on the seat 6.

The terminal insertion hole 62 of the electric power supply socket 61 is located above the main switch 51. Thus, compared with the case where a portion of the terminal insertion hole 62 is located at the same height as the main switch 51, it is difficult for the main switch 51 and the electric power supply socket 61 to make contact with each other in a space in front of the leg shield 29. Thus, there is no need to make any layout change, which is essentially unnecessary, to prevent the main switch 51 and the electric power supply socket 61 from making contact with each other. This enables the degree of freedom in the layout of the main switch 51 and the electric power supply socket 61 to be increased.

Furthermore, the center line Le of the electric power supply socket 61 extends horizontally or obliquely rearward and upward in a side view. When the terminal of the power supply cable is inserted into the terminal insertion hole 62, the power supply cable does not immediately hang down from the terminal insertion hole 62 of the electric power supply socket 61 but hangs down after having been extended horizontally or obliquely upward from the terminal insertion hole 62 of the electric power supply socket 61. Thus, compared with the case where the center line Le of the electric power supply socket 61 extends obliquely rearward and downward in a side view, it is easier to operate the main switch 51 and an electric device.

Additionally, at least a portion of the terminal insertion hole 62 is located farther to the front than the rear end 51r of the main switch 51 in a side view. Thus, an electric device such as the power supply cable connected to the electric power supply socket 61 is also displaced forward. Thus, it is difficult for the power supply cable or the like to make contact with the legs of the rider. In addition, it is possible to expand forward the space which is capable of receiving the legs of the rider therein. This makes it possible to improve rider comfort.

Furthermore, the main switch 51 and the electric power supply socket 61 are not located in the storage portion 46 but exposed on the leg shield 29. It is thus easy to operate the main switch 51 and the electric power supply socket 61. Furthermore, the right front wall 76 of the leg shield 29 includes the ceiling wall 76B disposed above the electric power supply socket 61, and the rear end of the ceiling wall 76B corresponding to the rear end 76r of the right front wall 76 is located farther to the rear than the electric power supply socket 61. At least a portion of the terminal insertion hole 62 overlaps the right front wall 76 in a plan view. That is, at least a portion of the terminal insertion hole 62 is hidden by the leg shield 29 in a plan view. Thus, even if the terminal insertion hole 62 is not oriented downward, it is difficult for falling water such as rainwater to enter the terminal insertion hole 62. Thus, it is difficult for water falling toward the terminal insertion hole 62 to reach the terminal insertion hole 62.

In the present preferred embodiment, at least a portion of the terminal insertion hole 62 is located farther to the front than the rear end 51r of the main switch 51 in a side view, and also located farther to the front than the upper end 51u of the main switch 51 in a side view. Thus, the electric power supply socket 61 and an electric device connected to the electric power supply socket 61 are further spaced away from the legs of the rider sitting on the seat 6. This makes it possible to improve rider comfort.

In the present preferred embodiment, not a portion of the terminal insertion hole 62 but the entirety of the terminal insertion hole 62 overlaps the right front wall 76 in a plan view and is hidden by the right front wall 76 in a plan view. Thus, it is more difficult for water falling toward the terminal insertion hole 62 to reach the terminal insertion hole 62.

In the present preferred embodiment, not only in a plan view but also in a side view, at least a portion of the terminal insertion hole 62 is hidden by the right front wall 76. For example, when the straddled vehicle 1 travels on a wet road surface, water on the road surface may be scattered in the vehicle width direction toward the terminal insertion hole 62. Thus, it is more difficult for the water scattered in the vehicle width direction toward the terminal insertion hole 62 reaches to reach the terminal insertion hole 62.

In the present preferred embodiment, the terminal insertion hole 62 is opened and closed by the cap 63. It is thus possible to protect the terminal insertion hole 62 from liquids such as rainwater or solids such as dust particles. Furthermore, since the hinge 86 to be bent as the cap 63 is opened or closed is located above the center line Le of the electric power supply socket 61, the cap 63 is opened immediately upward or obliquely upward relative to the terminal insertion hole 62. Thus, during use of the electric power supply socket 61, at least a portion of the cap 63 is disposed above the terminal insertion hole 62. The water falling toward the terminal insertion hole 62 during use of the electric power supply socket 61 is blocked not only by the leg shield 29 but also by the cap 63. This makes it difficult for water to reach the electric power supply socket 61 during use of the electric power supply socket 61.

In the present preferred embodiment, the drain hole 93 to discharge a liquid in the electric power supply socket 61 is provided in the housing 89 of the electric power supply socket 61. The housing 89 includes the cylindrical portion 89t that surrounds the terminal insertion hole 62, and the bottom portion 89b that closes the bottom of the cylindrical portion 89t. The drain hole 93 penetrates at least one of the cylindrical portion 89t and the bottom portion 89b and extends from the terminal insertion hole 62 to a space outside the electric power supply socket 61. Even when a liquid such as rainwater enters the terminal insertion hole 62 or water droplets are produced by condensation in the terminal insertion hole 62, the liquid in the terminal insertion hole 62 is discharged through the drain hole 93. This enables the amount of the liquid in the terminal insertion hole 62 to be reduced.

In the present preferred embodiment, the main switch 51 is exposed on the right base 75 of the leg shield 29. The main switch 51 extends obliquely forward and downward from the right base 75 toward a space in front of the leg shield 29. The distance in the up-down direction from the main switch 51 to the electric power supply socket 61 increases as the front end portion of the main switch 51 corresponding to the lower end portion of the main switch 51 is approached. The electrical wiring 67 (see Fig. 3) is connected to the electric power supply socket 61 in the space in front of the leg shield 29 and hangs down forward from the front end portion of the electric power supply socket 61. It is thus possible to expand a space that is capable of receiving the electrical wiring 67 connected to the electric power supply socket 61, thus providing a higher degree of freedom in the layout of the electrical wiring 67.

In the present preferred embodiment, at least a portion of the terminal insertion hole 62 is located at a position farther to the left than the right end of the main switch 51 and farther to the right than the left end of the main switch 51, in a rear view. That is, at least a portion of the terminal insertion hole 62 is located immediately above the main switch 51 in rear view. It is thus possible to compactly locate the main switch 51 and the electric power supply socket 61 in the vehicle width direction. This makes it possible to reduce the leg shield 29 in size in the right-left direction.

In the present preferred embodiment, at least a portion of the terminal insertion hole 62 is located immediately above the main switch 51 in a rear view, and also located farther outward than the center line Lm of the main switch 51 in the vehicle width direction in a rear view. That is, at least a portion of the terminal insertion hole 62 is shifted outward in the vehicle width direction with respect to the center line Lm of the main switch 51 in a rear view. Thus, when the main switch 51 is operated, it is difficult for an electric device inserted in the terminal insertion hole 62 to cause obstruction. Alternatively, it is difficult for the main switch 51 to obstruct the insertion or removal of the electric device into or from the terminal insertion hole 62.

In the present preferred embodiment, at least a portion of the terminal insertion hole 62 is located immediately above the main switch 51 in a side view. Thus, it is possible to compactly locate the main switch 51 and the electric power supply socket 61 in the front-rear direction. The leg shield 29 is disposed behind the front cover 27 that is located in front of the head pipe 3. A portion of the main switch 51 and a portion of the electric power supply socket 61 are disposed between the leg shield 29 and the front cover 27. It is thus possible to reduce the leg shield 29 and the front cover 27 in size in the front-rear direction.

In the present preferred embodiment, the distance H3 in the up-down direction from the upper end 51u of the main switch 51 to the rear end 62r of the terminal insertion hole 62 is shorter than the distance D3 in the front-rear direction from the rear end 51r of the main switch 51 to the rear end 62r of the terminal insertion hole 62. As described above, since the distance H3 in the up-down direction from the main switch 51 to the electric power supply socket 61 is shorter, it is possible to compactly locate the main switch 51 and the electric power supply socket 61 in the up-down direction. Furthermore, since the distance D3 in the front-rear direction from the main switch 51 to the electric power supply socket 61 is longer, the electric power supply socket 61 and an electric device connected to the electric power supply socket 61 are further spaced away from the legs of the rider. It is thus possible to further enhance rider comfort.

In the present preferred embodiment, at least a portion of the main switch 51 is located immediately above the head pipe 3 in a side view. The leg shield 29 is disposed behind the front cover 27 that is located in front of the head pipe 3. A portion of the main switch 51 is disposed between the leg shield 29 and the front cover 27. Thus, compared with the case where the entirety of the main switch 51 is located farther to the front than or behind the head pipe 3 in a side view, it is possible to reduce the leg shield 29 and the front cover 27 in size in the front-rear direction.

In the present preferred embodiment, the storage portion 46 is provided on the leg shield 29. Articles are placed in the storage portion 46 through the opening portion 46o of the storage portion 46. The opening portion 46o of the storage portion 46 is located on the same side as the main switch 51 and the electric power supply socket 61 relative to the vehicle center WO and is disposed below the terminal insertion hole 62. When the smartphone 66 placed in the storage portion 46 is connected to the electric power supply socket 61 through the power supply cable, the power supply cable does not pass through the vehicle center WO but hangs down from the electric power supply socket 61 to the smartphone 66 in the storage portion 46. Thus, compared with the case where the opening portion 46o of the storage portion 46 is disposed opposite to the main switch 51 and the electric power supply socket 61 relative to the vehicle center WO, it is difficult for the power supply cable to cause obstruction.

### Second Preferred Embodiment

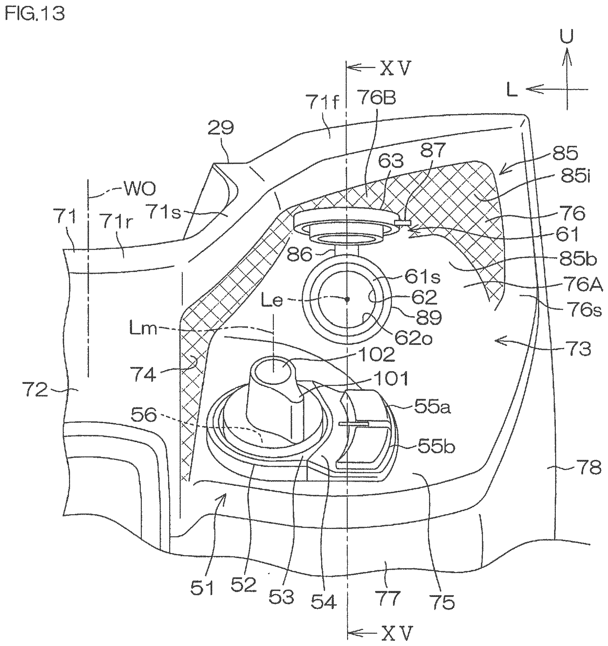

Now, referring to Fig. 13 to Fig. 15, a second preferred embodiment will be described. In Fig. 13 to Fig. 15, the components that are equivalent to those shown in Fig. 1 to Fig. 12 above are given the same reference symbols as those in Fig. 1 and so on, and will not be explained repeatedly.

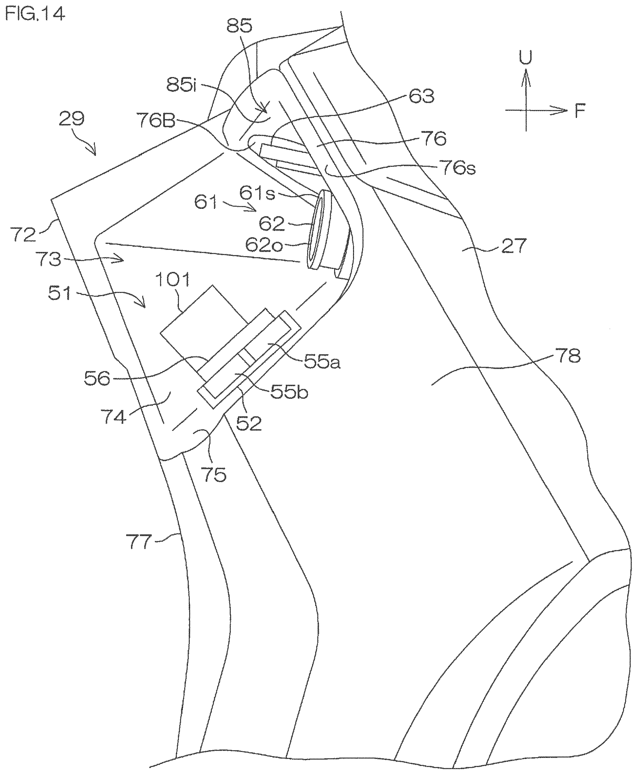

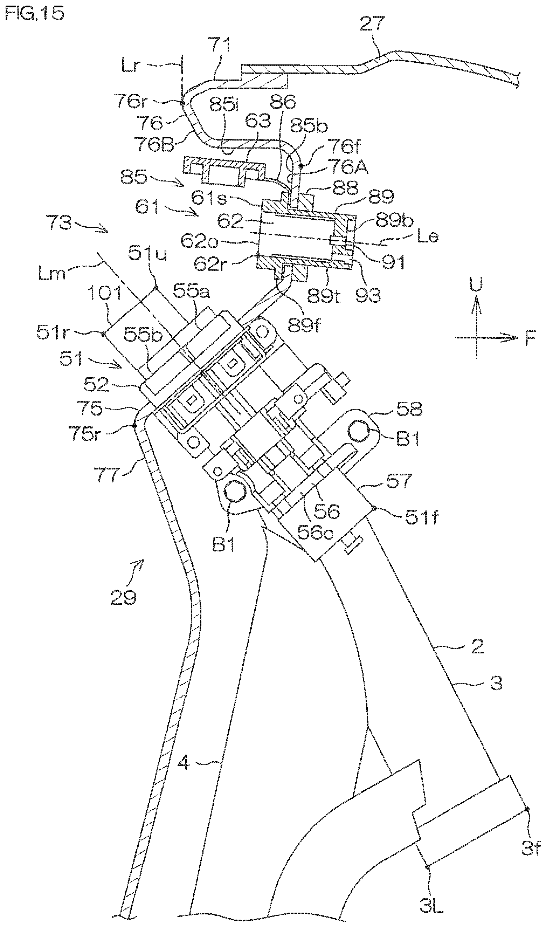

Fig. 13 and Fig. 14 are a rear view and a right side view each showing a leg shield 29, a main switch 51, and an electric power supply socket 61 according to the second preferred embodiment. Fig. 15 is a cross-sectional view showing a vertical cross section of the leg shield 29 and the electric power supply socket 61 taken along line XV-XV shown in Fig. 13. Fig. 13 to Fig. 15 each show a state in which the cap 63 is opened.

The latch 56 of the main switch 51 is not limited to a mechanical latch 56 that is locked and unlocked by operating the mechanical key, which is inserted into the key hole 56h, but may also be an electronic latch 56 that is locked and unlocked by operating an electronic key.

In the case of the electronic latch 56 of the main switch 51, the latch 56 of the main switch 51 may be provided with a turn knob that is turned around the center line Lm of the main switch 51 as the rider operates, may also be provided with a push button to be depressed by the rider, or may be provided with both the turn knob and the push button. Fig. 13 shows an example in which the latch 56 is an electronic latch and the latch 56 includes both a turn knob 101 and a push button 102.

As shown in Fig. 13, the leg shield 29 includes the right recess 73 that is recessed forward from the rear surface of the center wall 72. The right recess 73 is opened rearward and opened upward. The right recess 73 is further opened rightward. The right recess 73 includes the right base 75 that corresponds to a bottom portion of the right recess 73 in the up-down direction, the right inner wall 74 that extends upward from a left end portion of the right base 75, and the right front wall 76 that extends upward from a front end portion of the right base 75.

The switch panel 52 of the main switch 51 is mounted to the right base 75. The turn knob 101 of the main switch 51 is located on the switch panel 52. The push button 102 of the main switch 51 is located on the turn knob 101. The electric power supply socket 61 is mounted to the right front wall 76. The terminal insertion hole 62 is located above the turn knob 101 and the push button 102 in rear view.

As shown in Fig. 14, the terminal insertion hole 62 is located farther to the front than the switch panel 52 and the turn knob 101 in a side view. The terminal insertion hole 62 is located behind the front cover 27 in a side view. At least a portion of the terminal insertion hole 62 is visible in a side view. Fig. 14 shows an example in which the center line Le of the electric power supply socket 61 extends obliquely rearward and upward in a side view. The center line Le of the electric power supply socket 61 may extend horizontally in a side view.

As shown in Fig. 15, the right front wall 76 of the leg shield 29 includes the front portion 76A extending upward from the right base 75, and the ceiling wall 76B extending rearward from the front portion 76A. The front portion 76A is located farther to the front than the rear end 51r of the main switch 51. The front portion 76A is also disposed farther to the front than the opening 62o of the terminal insertion hole 62 that is located on the same plane as the end surface 61s of the housing 89. The ceiling wall 76B is located above the terminal insertion hole 62. The rear end of the ceiling wall 76B corresponds to the rear end 76r of the right front wall 76.

The rear end 76r of the right front wall 76 of the leg shield 29 corresponds to the upper end of the right front wall 76. The terminal insertion hole 62 is located at a position lower than the rear end 76r of the ceiling wall 76B and farther to the front than the rear end 76r of the ceiling wall 76B. The terminal insertion hole 62 is located farther to the front than the vertical imaginary straight line Lr that passes through the rear end 76r of the ceiling wall 76B in a side view. At least a portion of the terminal insertion hole 62 overlaps the ceiling wall 76B in a plan view and is hidden by the ceiling wall 76B in a plan view.

As shown in Fig. 13, at least a portion of the terminal insertion hole 62 of the electric power supply socket 61 is disposed in rear view inside the recess 85 that is provided on the right front wall 76. The recess 85 includes the bottom surface 85b located farther to the front than the opening 62o of the terminal insertion hole 62, and the inner peripheral surface 85i extending forward from the rear surface 76s of the right front wall 76 to the bottom surface 85b. The cross-hatched region in Fig. 13 shows the inner peripheral surface 85i of the recess 85. The recess 85 has such a shape that covers the upper half of the electric power supply socket 61.

As shown in Fig. 14, a portion of the electric power supply socket 61 overlaps the inner peripheral surface 85i of the recess 85 in a side view, and is hidden by the inner peripheral surface 85i of the recess 85 in a side view. More specifically, a portion of the housing 89 of the electric power supply socket 61 overlaps the inner peripheral surface 85i of the recess 85 in a side view. On the other hand, the electric power supply socket 61 includes a portion that does not overlap the recess 85 in a side view and that is visible in a side view. For example, the end surface 61s of the electric power supply socket 61 and the opening 62o of the terminal insertion hole 62 are not covered with the inner peripheral surface 85i of the recess 85 in a side view and visible in a side view.

### Other Preferred Embodiments

The present teaching is not restricted to the contents of the preferred embodiments described above and various modifications are possible.

The main switch 51 may include a power supply switch in place of the select switch 57 that corresponds to the power supply switch and a start switch. In this case, the straddled vehicle 1 may be provided with a start button that will be depressed by the rider when the rider switches the start switch from an OFF state to an ON state.

If at least a portion of the terminal insertion hole 62 is disposed farther to the front than the rear end 51r of the main switch 51 in a side view, at least a portion of the terminal insertion hole 62 may not be located farther to the front than the upper end 51u of the main switch 51 in a side view. For example, the front end of the terminal insertion hole 62 may be disposed immediately above the main switch 51 in a side view.

Only a portion of the terminal insertion hole 62 may be hidden by the leg shield 29 in a plan view, and the remainder of the terminal insertion hole 62 may be visible in a plan view.

None of the opening 62o of the terminal insertion hole 62 may overlap, in a side view, the ceiling wall 76B that is provided on the right front wall 76 of the leg shield 29 and the entirety thereof may be visible in a side view. For example, the outside portion of the ceiling wall 76B may be eliminated so that any of the opening 62o of the terminal insertion hole 62 will not be hidden in a side view.

The entirety of the hinge 86 that is bent as the cap 63 is opened or closed may be located below the center line Le of the electric power supply socket 61. The cap 63 and the hinge 86 may be eliminated from the electric power supply socket 61.

The drain hole 93 that discharges a liquid inside the electric power supply socket 61 may not penetrate the bottom portion 89b of the housing 89, but may penetrate the cylindrical portion 89t of the housing 89. The drain hole 93 that penetrates the bottom portion 89b and the drain hole 93 that penetrates the cylindrical portion 89t may be provided on the housing 89. The drain hole 93 may be eliminated from the electric power supply socket 61.

The entirety of the terminal insertion hole 62 may be disposed inward in the vehicle width direction from the center line Lm of the main switch 51 in rear view. The entirety of the terminal insertion hole 62 may also be disposed rightward from the right end of the main switch 51 in rear view. Alternatively, the entirety of the terminal insertion hole 62 may also be disposed leftward from the left end of the main switch 51 in rear view.

The entirety of the main switch 51 may be disposed farther to the front than the front end 3f of the head pipe 3 in a side view. Alternatively, the entirety of the main switch 51 may be disposed farther to the rear than the rear end 3r of the head pipe 3 in a side view.

The opening portion 46o of the storage portion 46 may be disposed above the terminal insertion hole 62. The opening portion 46o of the storage portion 46 may be disposed opposite to the main switch 51 and the electric power supply socket 61 relative to the head pipe 3 in rear view. The storage portion 46 may also be eliminated from the leg shield 29.

The main switch 51 and the electric power supply socket 61 may not be disposed on the right side of the head pipe 3 in rear view, but may be disposed on the left side of the head pipe 3 in rear view. For example, the main switch 51 may be disposed not on the right base 75 but on the left base 81. Likewise, the electric power supply socket 61 may be disposed not on the right front wall 76 but on the left front wall 82. That is, the main switch 51 may only have to be disposed on the base, and the electric power supply socket 61 may only have to be located on the front wall. In other words, the main switch 51 and the electric power supply socket 61 may only have to be located in the recess that is disposed on the right or left side of the head pipe 3 (in either one of the right recess 73 and the left recess 79).

At least a portion of the main switch 51 may be disposed on the front wall (either one of the right front wall 76 and the left front wall 82). At least a portion of the electric power supply socket 61 may also be disposed on the base (either one of the right base 75 and the left base 81). For example, a portion of the main switch 51 may be disposed on the right front wall 76, and the remainder of the main switch 51 may be disposed on the right base 75 or the corner portion 73c.

The filler cap 45 may be disposed at a position other than the rear surface of the leg shield 29. Likewise, the fuel tank 13 may be disposed at a position other than the space under the footboard 30.

The straddled vehicle 1 is not limited to a motorcycle that includes a swing unit which supports the rear wheel Wr and is swingable up and down relative to the frame 2, but may also be a motorcycle that includes a swing arm which supports the rear wheel Wr and is swingable up and down relative to the engine 16 and the frame 2. The straddled vehicle 1 may also be a motorcycle that includes three or more wheels, an all-terrain vehicle, or a snowmobile.

Two or more arrangements among all the arrangements described above may be combined.

## Claims

1. A straddled vehicle (1) comprising:
a prime mover (16) configured to generate power to run the straddled vehicle (1);
a frame (2) including a head pipe (3) disposed at a vehicle center (WO) in a width direction of the vehicle (1);
a seat (6) located behind the head pipe (3) for a rider to sit on;
a leg shield (29) which is located between the head pipe (3) and the seat (6) in a front-rear direction of the vehicle (1) and located in front of the legs of the rider sitting on the seat (6);
a main switch (51) which is configured to be operated by the rider to start the prime mover (16); and
an electric power supply socket (61) that includes a terminal insertion hole (62) configured for inserting a terminal of an electric device (64), wherein
the leg shield (29) includes a base (75), and a front wall (76) which extends upward from the base (75), and to which the electric power supply socket (61) is mounted, wherein the main switch (51) is located on a right or left side of the head pipe (3) in the width direction of the vehicle (1); and
the electric power supply socket (61) being disposed on the same side as the main switch (51) relative to the head pipe (3) in the width direction of the vehicle (1), **characterized in that**
the main switch (51) is mounted to the base (75) of the leg shield (29), and the front wall (76) is located farther to the front than a rear end (51r) of the main switch (51),the main switch (51) and the electric power supply socket (61) are located on an outer surface of the leg shield (29),
the terminal insertion hole (62) of the electric power supply socket (61) is located above the main switch (51),
at least a portion of the terminal insertion hole (62) is located farther to the front than the rear end (51r) of the main switch (51) in a side view of the vehicle (1),
at least a portion of the terminal insertion hole (62) overlaps the front wall (76) in a plan view of the vehicle (1),
a center line (Le) of the electric power supply socket (61) extends horizontally or rearward and upward in a side view of the vehicle (1), and
the front wall (76) of the leg shield (29) includes a ceiling wall (76B) which has a rear end (76r) disposed farther to the rear than the electric power supply socket (61) and which is located above the electric power supply socket (61).

2. A straddled vehicle (1) according to claim 1, **characterized in that** at least a portion of the terminal insertion hole (62) is located farther to the front than an upper end (51u) of the main switch (51) in a side view of the vehicle (1).

3. A straddled vehicle (1) according to claim 1 or 2, **characterized in that** an entirety of the terminal insertion hole (62) overlaps the front wall (76) in a plan view of the vehicle (1).

4. A straddled vehicle (1) according to any one of claims 1 to 3, **characterized in that** at least a portion of the terminal insertion hole (62) overlaps the front wall (76) in a side view of the vehicle (1).

5. A straddled vehicle (1) according to any one of claims 1 to 4, **characterized in that** the electric power supply socket (61) includes a cap (63) configured to open or close the terminal insertion hole (62) and a hinge (86) to be bent as the cap (63) is opened or closed, and
at least a portion of the hinge (86) is disposed above the center line (Le) of the electric power supply socket (61).

6. A straddled vehicle (1) according to any one of claims 1 to 5, **characterized in that** the electric power supply socket (61) includes a tubular housing (89) that surrounds the terminal insertion hole (62), and
the housing (89) includes a cylindrical portion (89t) that surrounds the terminal insertion hole (62), a bottom portion (89b) that closes a bottom of the cylindrical portion (89t), and a drain hole (93) that passes through at least one of the cylindrical portion (89t) and the bottom portion (89b) and extends from the terminal insertion hole (62) to a space outside the electric power supply socket (61).

7. A straddled vehicle (1) according to any one of claims 1 to 6, **characterized in that** the main switch (51) extends obliquely forward and downward from the base (75) toward a space in front of the leg shield (29).

8. A straddled vehicle (1) according to any one of claims 1 to 7, **characterized in that** at least a portion of the terminal insertion hole (62) is located between a right vertical imaginary straight line (Lx) that passes through a right end (51x) of the main switch (51) and a left vertical imaginary straight line (Ly) that passes through a left end (51y) of the main switch (51), in a rear view of the vehicle (1).

9. A straddled vehicle (1) according to claim 8, **characterized in that** at least a portion of the terminal insertion hole (62) is located farther outward than the center line (Lm) of the main switch (51) in the width direction of the vehicle (1), in a rear view of the vehicle (1).

10. A straddled vehicle (1) according to any one of claims 1 to 9, **characterized in that** the terminal insertion hole (62) is located at a position farther to the rear than a front end (51f) of the main switch (51) and farther to the front than the rear end (51r) of the main switch (51), in a side view of the vehicle (1).

11. A straddled vehicle (1) according to any one of claims 1 to 10, **characterized in that** a distance (H3) from the upper end (51u) of the main switch (51) to a rear end (62r) of the terminal insertion hole (62) in an up-down direction of the vehicle (1) is shorter than a distance (D3) from the rear end (51r) of the main switch (51) to the rear end (62r) of the terminal insertion hole (62) in the front-rear direction of the vehicle (1).

12. A straddled vehicle (1) according to any one of claims 1 to 11, **characterized in that** at least a portion of the main switch (51) is located at a position farther to the rear than a front end (3f) of the head pipe (3) and farther to the front than a rear end (3r) of the head pipe (3), in a side view of the vehicle (1).

13. A straddled vehicle (1) according to any one of claims 1 to 12, **characterized in that** the leg shield (29) further includes a storage portion (46) configured to accommodate an article, and
the storage portion (46) is disposed on the same side as the main switch (51) and the electric power supply socket (61) relative to the head pipe (3) in the width direction of the vehicle (1) and includes an opening portion (46o) located below the terminal insertion hole (62).

## Patentansprüche

1. Ein Spreiz-Sitz-Fahrzeug (1), das umfasst:
ein Haupt-Antriebsaggregat (16), das konfiguriert ist, um Leistung zu erzeugen, um das Spreiz-Sitz-Fahrzeug (1) anzutreiben;
einen Rahmen (2), der ein Kopf-Rohr (3) beinhaltet, das an einer Fahrzeug-Mitte (WO) in einer Breiten-Richtung von dem Fahrzeug (1) positioniert ist;
einen Sitz (6), der hinter dem Kopf-Rohr (3) angeordnet ist, für einen Fahrer, um darauf zu sitzen;
ein Bein-Schild (29), das zwischen dem Kopf-Rohr (3) und dem Sitz (6) in einer Vorder-Rück-Richtung von dem Fahrzeug (1) angeordnet ist, und vor den Beinen von dem Fahrer, der auf dem Sitz (6) sitzt, angeordnet ist;
einen Hauptschalter (51), der konfiguriert ist, um durch den Fahrer betätigt zu werden, um das Haupt-Antriebsaggregat (16) zu starten; und
eine Elektro-Leistungs-Zufuhr-Dose (61), die ein Anschluss-Einsetz-Loch (62) beinhaltet, das konfiguriert ist zum Einsetzen eines Anschlusses von einer Elektro-Vorrichtung (64), wobei
das Bein-Schild (29) eine Basis (75), und eine Vorder-Wand (76), die sich nach oben von der Basis (75) erstreckt, und an der die Elektro-Leistungs-Zufuhr-Dose (61) montiert ist, beinhaltet, wobei der Hauptschalter (51) an einer rechten oder linken Seite von dem Kopf-Rohr (3) in der Breiten-Richtung von dem Fahrzeug (1) angeordnet ist; und
die Elektro-Leistungs-Zufuhr-Dose (61) an der gleichen Seite wie der Hauptschalter (51) relativ zu dem Kopf-Rohr (3) in der Breiten-Richtung von dem Fahrzeug (1) positioniert ist, **dadurch gekennzeichnet, dass**
der Hauptschalter (51) an der Basis (75) von dem Bein-Schild (29) montiert ist, und die Vorder-Wand (76) weiter vorne als ein Rück-Ende (51r) von dem Hauptschalter (51) angeordnet ist, der Hauptschalter (51) und die Elektro-Leistungs-Zufuhr-Dose (61) an einer Außen-Fläche von dem Bein-Schild (29) angeordnet sind,
das Anschluss-Einsetz-Loch (62) von der Elektro-Leistungs-Zufuhr-Dose (61) oberhalb des Hauptschalters (51) angeordnet ist,
zumindest ein Abschnitt von dem Anschluss-Einsetz-Loch (62) weiter vorne als das Rück-Ende (51r) von dem Hauptschalter (51) angeordnet ist, in einer Seiten-Ansicht von dem Fahrzeug (1),
zumindest einen Abschnitt von dem Anschluss-Einsetz-Loch (62) die Vorder-Wand (76) überlappt, in einer Draufsicht von dem Fahrzeug (1),
eine Mittel-Linie (Le) von der Elektro-Leistungs-Zufuhr-Dose (61) sich horizontal oder rückwärtig und aufwärts erstreckt, in einer Seiten-Ansicht von dem Fahrzeug (1), und
die Vorder-Wand (76) von dem Bein-Schild (29) eine Begrenzungs-Wand (76B) beinhaltet, die ein Rück-Ende (76r) hat, das weiter hinten positioniert ist als die Elektro-Leistungs-Zufuhr-Dose (61), und die oberhalb der Elektro-Leistungs-Zufuhr-Dose (61) angeordnet ist.

2. Ein Spreiz-Sitz-Fahrzeug (1) gemäß zu Anspruch 1, **dadurch gekennzeichnet, dass** zumindest ein Abschnitt von dem Anschluss-Einsetz-Loch (62) weiter vorne angeordnet ist als ein oberes Ende (51u) von dem Hauptschalter (51), in einer Seiten-Ansicht von dem Fahrzeug (1).

3. Ein Spreiz-Sitz-Fahrzeug (1) gemäß zu Anspruch 1 oder 2, **dadurch gekennzeichnet, dass** eine Gesamtheit von dem Anschluss-Einsetz-Loch (62) die Vorder-Wand (76) überlappt, in einer Draufsicht von dem Fahrzeug (1).

4. Ein Spreiz-Sitz-Fahrzeug (1) gemäß zu irgendeinem der Ansprüche 1 bis 3, **dadurch gekennzeichnet, dass** zumindest ein Abschnitt von dem Anschluss-Einsetz-Loch (62) die Vorder-Wand (76) überlappt, in einer Seiten-Ansicht von dem Fahrzeug (1).

5. Ein Spreiz-Sitz-Fahrzeug (1) gemäß zu irgendeinem der Ansprüche 1 bis 4, **dadurch gekennzeichnet, dass** die Elektro-Leistungs-Zufuhr-Dose (61) eine Kappe (63), die konfiguriert ist, um das Anschluss-Einsetz-Loch (62) zu öffnen und zu verschließen, und ein Gelenk (86), das zu biegen ist, wenn die Kappe (63) geöffnet oder verschlossen ist, beinhaltet, und
zumindest ein Abschnitt von dem Gelenk (86) oberhalb der Mittel-Linie (Le) von der Elektro-Leistungs-Zufuhr-Dose (61) positioniert ist.

6. Ein Spreiz-Sitz-Fahrzeug (1) gemäß zu irgendeinem der Ansprüche 1 bis 5, **dadurch gekennzeichnet, dass** die Elektro-Leistungs-Zufuhr-Dose (61) ein rohrförmiges Gehäuse (89) beinhaltet, welches das Anschluss-Einsetz-Loch (62) umgibt, und
das Gehäuse (89) einen zylindrischen Abschnitt (89t), der das Anschluss-Einsetz-Loch (62) umgibt, einen Boden-Abschnitt (89b), der einen Boden von dem zylindrischen Abschnitt (89t) verschließt, und ein Drainage-Loch (93), das durch zumindest einen von dem zylindrischen Abschnitt (89t) und dem Bodenabschnitt (89b) hindurchtritt, und sich von dem Anschluss-Einsetz-Loch (62) zu einem Raum außerhalb von der Elektro-Leistungs-Zufuhr-Dose (61) erstreckt, beinhaltet.

7. Ein Spreiz-Sitz-Fahrzeug (1) gemäß zu irgendeinem der Ansprüche 1 bis 6, **dadurch gekennzeichnet, dass** der Hauptschalter (51) sich schräg nach vorne und unten von der Basis (75) zu einem Raum vor dem Bein-Schild (29) erstreckt.

8. Ein Spreiz-Sitz-Fahrzeug (1) gemäß zu irgendeinem der Ansprüche 1 bis 7, **dadurch gekennzeichnet, dass** zumindest ein Abschnitt von dem Anschluss-Einsetz-Loch (62) zwischen einer rechten vertikal imaginären geraden Linie (Lx), die durch ein rechtes Ende (51x) von dem Hauptschalter (51) hindurchtritt, und einer linken vertikalen imaginären geraden Linie (Ly), die durch ein linkes Ende (51y) von dem Hauptschalter (51) hindurchtritt, angeordnet ist, in einer Rück-Ansicht von dem Fahrzeug (1).

9. Ein Spreiz-Sitz-Fahrzeug (1) gemäß zu Anspruch 8, **dadurch gekennzeichnet, dass** zumindest ein Abschnitt von dem Anschluss-Einsetz-Loch (62) weiter außen als die Mittel-Linie (Lm) von dem Hauptschalter (51) in der Breiten-Richtung von dem Fahrzeug (1) angeordnet ist, in a Rück-Ansicht von dem Fahrzeug (1).

10. Ein Spreiz-Sitz-Fahrzeug (1) gemäß zu irgendeinem der Ansprüche 1 bis 9, **dadurch gekennzeichnet, dass** das Anschluss-Einsetz-Loch (62) an einer Position weiter hinten als ein Vorder-Ende (51f) von dem Hauptschalter (51) und weiter nach vorne als das Rück-Ende (51r) von dem Hauptschalter (51) angeordnet ist, in einer Seiten-Ansicht von dem Fahrzeug (1).

11. Ein Spreiz-Sitz-Fahrzeug (1) gemäß zu irgendeinem der Ansprüche 1 bis 10, **dadurch gekennzeichnet, dass** ein Abstand (H3) von dem oberen Ende (51u) von dem Hauptschalter (51) zu einem Rück-Ende (62r) von dem Anschluss-Einsetz-Loch (62) in einer Oben-Unten-Richtung von dem Fahrzeug (1) kürzer ist als ein Abstand (D3) von dem Rück-Ende (51r) von dem Hauptschalter (51) zu dem Rück-Ende (62r) von dem Anschluss-Einsetz-Loch (62) in der Vorder-Rück-Richtung von dem Fahrzeug (1).

12. Ein Spreiz-Sitz-Fahrzeug (1) gemäß zu irgendeinem der Ansprüche 1 bis 11, **dadurch gekennzeichnet, dass** zumindest ein Abschnitt von dem Hauptschalter (51) an einer Position weiter hinten als ein Vorder-Ende (3f) von dem Kopf-Rohr (3) und weiter vorne als ein Rück-Ende (3r) von dem Kopf-Rohr (3) angeordnet ist, in einer Seiten-Ansicht von dem Fahrzeug (1).

13. Ein Spreiz-Sitz-Fahrzeug (1) gemäß zu irgendeinem der Ansprüche 1 bis 12, **dadurch gekennzeichnet, dass** das Bein-Schild (29) weiterhin einen Lager-Abschnitt (46) beinhaltet, der konfiguriert ist, um einen Artikel aufzunehmen, und
der Lager-Abschnitt (46) auf der gleichen Seite wie der Hauptschalter (51) und die Elektro-Leistungs-Zufuhr-Dose (61) relativ zu dem Kopf-Rohr (3) in der Breiten-Richtung von dem Fahrzeug (1) positioniert ist, und einen Öffnungs-Abschnitt (46o) beinhaltet, der unterhalb des Anschluss-Einsetz-Lochs (62) angeordnet ist.

## Revendications

1. Véhicule à chevauchement (1) comprenant :
un moteur principal (16) configuré pour générer de la puissance pour faire fonctionner le véhicule à chevauchement (1) ;
un châssis (2) comprenant un tuyau de tête (3) disposé au niveau d'un centre (WO) du véhicule dans une direction de la largeur du véhicule (1) ;
un siège (6) situé derrière le tuyau de tête (3) sur lequel un conducteur peut s'asseoir ; une protection de jambes (29) qui est située entre le tuyau de tête (3) et le siège (6) dans une direction avant/arrière du véhicule (1) et est située devant les jambes du conducteur assis sur le siège (6) ;
un interrupteur principal (51) qui est configuré pour être actionné par le conducteur pour démarrer le moteur principal (16) ; et
une prise d'alimentation en énergie électrique (61) qui comprend un trou d'insertion de borne (62) configuré pour insérer une borne d'un dispositif électrique (64), où la protection de jambes (29) comprend une base (75) et une paroi avant (76) qui s'étend vers le haut à partir de la base (75) et sur laquelle est montée la prise d'alimentation en énergie électrique (61),
où
l'interrupteur principal (51) est situé sur un côté droit ou gauche du tuyau de tête (3) dans la direction de la largeur du véhicule (1) ; et
la prise d'alimentation en énergie électrique (61) est disposée sur le même côté que l'interrupteur principal (51) par rapport au tuyau de tête (3) dans la direction de la largeur du véhicule (1), **caractérisé en ce que**
l'interrupteur principal (51) est monté sur la base (75) de la protection de jambes (29) et la paroi avant (76) est située plus vers l'avant qu'une extrémité arrière (51r) de l'interrupteur principal (51), l'interrupteur principal (51) et la prise d'alimentation en énergie électrique (61) sont situés sur une surface extérieure de la protection de jambes (29),
le trou d'insertion de borne (62) de la prise d'alimentation en énergie électrique (61) est situé au-dessus de l'interrupteur principal (51),
au moins une partie du trou d'insertion de borne (62) set située plus vers l'avant que l'extrémité arrière (5 Ir) de l'interrupteur principal (51) dans une vue latérale du véhicule (1),
au moins une partie du trou d'insertion de borne (62) se superpose à la paroi avant (76) dans une vue en plan du véhicule (1),
une ligne centrale (Le) de la prise d'alimentation en énergie électrique (61) s'étend horizontalement ou vers l'arrière et vers le haut dans une vue latérale du véhicule (1),
la paroi avant (76) de la protection de jambes (29) comprend une paroi de plafond (76B) dont une extrémité arrière (76r) est disposée plus vers l'arrière que la prise d'alimentation en énergie électrique (61) et qui se situe au-dessus de la prise d'alimentation en énergie électrique (61).

2. Véhicule à chevauchement (1) selon la revendication 1, **caractérisé en ce qu'**au moins une partie du trou d'insertion de borne (62) est située plus vers l'avant qu'une extrémité supérieure (5 lu) de l'interrupteur principal (51) dans une vue latérale du véhicule (1).

3. Véhicule à chevauchement (1) selon la revendication 1 ou 2, **caractérisé en ce qu'**une totalité du trou d'insertion de borne (62) se superpose à la paroi avant (76) dans une vue en plan du véhicule (1).

4. Véhicule à chevauchement (1) selon l'une quelconque des revendications 1 à 3, **caractérisé en ce qu'**au moins une partie du trou d'insertion de borne (62) se superpose à la paroi avant (76) dans une vue latérale du véhicule (1).

5. Véhicule à chevauchement (1) selon l'une quelconque des revendications 1 à 4, **caractérisé en ce que** la prise d'alimentation en énergie électrique (61) comprend un capuchon (63) configuré pour ouvrir ou fermer le trou d'insertion de borne (62) et une charnière (86) destinée à être pliée lorsque le capuchon (63) est ouvert ou fermé, et
au moins une partie de la charnière (86) est disposée au-dessus de la ligne centrale (Le) de la prise d'alimentation en énergie électrique (61).

6. Véhicule à chevauchement (1) selon l'une quelconque des revendications 1 à 5, **caractérisé en ce que** la prise d'alimentation en énergie électrique (61) comprend un boîtier tubulaire (89) qui entoure le trou d'insertion de borne (62), et
le boîtier (89) comprend une partie cylindrique (89t) qui entoure le trou d'insertion de borne (62), une partie de fond (89b) qui ferme un fond de la partie cylindrique (89t) et un trou de drainage (93) qui passe à travers la partie cylindrique (89t) et/ou la partie de fond (89b) et s'étend du trou d'insertion de borne (62) jusqu'à un espace extérieur à la prise d'alimentation en énergie électrique (61).

7. Véhicule à chevauchement (1) selon l'une quelconque des revendications 1 à 6, **caractérisé en ce que** l'interrupteur principal (51) s'étend obliquement vers l'avant et vers le bas depuis la base (75) vers un espace à l'avant de la protection de jambes (29).

8. Véhicule à chevauchement (1) selon l'une quelconque des revendications 1 à 7, **caractérisé en ce qu'**au moins une partie du trou d'insertion de borne (62) est située entre une ligne droite imaginaire verticale droite (Lx) qui passe à travers une extrémité droite (51x) de l'interrupteur principal (51) et une ligne droite imaginaire verticale gauche (Ly) qui passe à travers une extrémité gauche (51y) de l'interrupteur principal (51) dans une vue arrière du véhicule (1).

9. Véhicule à chevauchement (1) selon la revendication 8, **caractérisé en ce qu'**au moins une partie du trou d'insertion de borne (62) est située plus vers l'extérieur qu'une ligne centrale (Lm) de l'interrupteur principal (51) dans la direction de la largeur du véhicule (1), dans une vue arrière du véhicule (1).

10. Véhicule à chevauchement (1) selon l'une quelconque des revendications 1 à 9, **caractérisé en ce que** le trou d'insertion de borne (62) est situé en une position plus en arrière qu'une extrémité avant (51f) de l'interrupteur principal (51) et plus en avant que l'extrémité arrière (51r) de l'interrupteur principal (51) dans une vue latérale du véhicule (1).

11. Véhicule à chevauchement (1) selon l'une quelconque des revendications 1 à 10, **caractérisé en ce qu'**une distance (H3) entre l'extrémité supérieure (51u) de l'interrupteur principal (51) et une extrémité arrière (62r) du trou d'insertion de borne (62) dans une direction de haut en bas du véhicule (1) est plus courte qu'une distance (D3) entre l'extrémité arrière (51r) de l'interrupteur principal (51) et l'extrémité arrière (62r) du trou d'insertion de borne (62) dans la direction avant/arrière du véhicule (1.

12. Véhicule à chevauchement (1) selon l'une quelconque des revendications 1 à 11, **caractérisé en ce qu'**au moins une partie de l'interrupteur principal (51) est située en une position plus vers l'arrière qu'une extrémité avant (3f) du tuyau de tête (3) et plus vers l'avant qu'une extrémité arrière (3r) du tuyau de tête (3) dans une vue latérale du véhicule (1).

13. Véhicule à chevauchement (1) selon l'une quelconque des revendications 1 à 12, **caractérisé en ce que** la protection de jambes (29) comprend en outre une partie de stockage (46) configurée pour recevoir un objet, et
la partie de stockage (46) est disposée sur le même côté que l'interrupteur principal (51) et la prise d'alimentation en énergie électrique (61) par rapport au tuyau de tête (3) dans la direction de la largeur du véhicule (1) et comprend une partie d'ouverture (46o) située sous le trou d'insertion de borne (62).
